# EUROPEAN PATENT APPLICATION

(11) **EP 2 779 662 A1**
(43) Date of publication of application: **17.09.2014**
(21) Application number: 14159613.0
(22) Date of filing: 13.03.2014
(51) Int. Cl.: H04N 21/235, H04N 21/858

(54) **Systems and methods for using signal-derived segmented identifiers to manage resource contention and control access to data and functions**

(30) Priority: 15.03.2013 US 201313836682
(71) Applicant: Verisign, Inc., Reston, VA 20190 (US)
(72) Inventor: Fregley, Andrew, Reston, VA Virginia 20190 (US); Goyal, Neel, Reston, VA Virginia 20190 (US); Dousti, Ramin Ali, Reston, VA Virginia 20190 (US); Dasari, Aparna, Reston, VA Virginia 20190 (US)
(74) Representative: Benson, Christopher

(57) **Abstract**

Systems and methods are provided for using a hidden audio signal. In one exemplary embodiment, the method includes receiving, by a user device, media associated with at least one identifier. The identifier includes at least one identifier segment associated with at least one channel identifier. The method further includes causing the at least one identifier to be decoded, and sending a request including the at least one identifier to a resolution provider. In addition, the method include receiving information from the resolution provider, where the information is associated with the at least one identifier. Additionally, the method includes identifying, by the user device, at least one application operating on the user device that is authorized to receive the information associated with the at least one identifier, based on at least one of the content of the identifier or the channel identifier, and delivering the information to the at least one application that is identified.

## Description

### TECHNICAL FIELD

The present disclosure relates generally to systems and methods for providing resources and resource identifiers to user devices via enhanced audio signals.

### BACKGROUND

Mobile computer devices and smart phones have become more prevalent and ubiquitous with advances in electronics, communications and data networks, availability of access to resources, and decreased costs. As a result, increasing numbers of the population have access to personal electronic devices that, in turn, require a large range of mobile applications and access to cellular telephone networks and the Internet. In an attempt to enhance a user experience and simplify navigation, various tools have been suggested. Printed labeling or advertising, for example, may include one-dimensional (e.g., Universal Product Code (UPC), etc.) or matrix barcodes (e.g., QR Codes, etc.) readable by dedicated barcode readers, camera phones, etc., to direct a user to a resource. A product or associated signage may include a Uniform Resource Locator (URL) within the barcodes that, when read by an optical scanning application, prompts a browser client to retrieve related information from the URL or access product information from a webpage identified by the URL.

Such techniques, however, rely on printed bar codes and optical scanning to obtain information. In some kinds of communication media, such as television or other video presentation, it may be difficult or impractical to encode information within bar codes or other optical patterns for scanning, since the clarity or resolution necessary for scanning devices to decode such patterns may be lacking. Moreover, such optical techniques are not applicable to non-visual communication media, such as radio or other audio or signal media.

Therefore, there is a need to provide digital information capable of resolution by a user device through signals, such as, for example, audio signals, and provide various mechanisms by which user devices may access resources associated with the digital information, whether directly or with the assistance of a separate resolution server. Watermarking techniques, for example, can be used to provide digital information to users via a carrier signal, such as audio, video, or image signals. These techniques can also be used to initiate the presentation of information to users. For example, a retail location can play a song or other soundtrack in the background to provide ambiance. Embedded in that song or soundtrack may be a watermark - generally speaking, an identifier that is not detectable by human hearing, but is interpretable by electronic devices.

However, some problems arise in the typical schema of audio watermarking. Namely, each time a user wants to use his device to interpret a watermark, the user might need to start up an individual application directed to the particular location he is in. Furthermore, a malicious program could attempt to listen to every sound (and thus every watermark) that is received by the phone - thus, in effect, "spying" on other entities' watermarks. Entities that independently assign identifiers encoded within watermarks may use the same identifier values, resulting in unexpected and undesirable delivery of information, or invocation of undesirable functional capabilities. Malicious actors may even intentionally reuse identifiers from other entities to support their malicious purposes. Still further, many mobile devices only permit a single program to use the device's microphone at any time.

The disclosed embodiments address one or more of the problems set forth above.

### SUMMARY

In one example embodiment, the present disclosure is directed to a method for registering identifiers and associated information, comprising: receiving a channel identifier associated with at least one channel; generating, using at least one computer, at least one identifier for use with an application, wherein the at least one identifier includes at least one identifier segment and the identifier segment is associated with the at least one channel identifier; and sending the at least one identifier to a resolution provider. The method may further comprise associating the at least one identifier with at least one media item and information; sending, to the resolution provider, the at least one identifier; and sending, to the resolution provider, the information that is associated with the at least one identifier. The method may further comprise encoding the at least one media item with the at least one identifier; and providing the at least one media item that is encoded with the at least identifier to an entity for broadcast to one or more user devices. The method may further comprise encoding the at least one media item with the at least one identifier; and broadcasting, to one or more user devices, the at least one media item that is encoded with the at least identifier. The associated information may be at least one of a URL, a URI, or data for use by the application, and wherein the at least one media item comprises at least one of a sound clip, a music clip, a video, an image, a picture, a signal, or data. The method may further include receiving an authentication item from the resolution provider; generating a shared secret; and sending the shared secret to the resolution provider. The method may further include encoding the at least one media item with the at least one identifier and the authentication item. The method may further include providing the at least one media item that is encoded with the at least identifier and the authentication item for broadcast to one or more user devices.

In another example embodiment, the present disclosure is directed to a system for registering identifiers and associated information, comprising: at least one storage device storing instructions; and at least one computer processor configured to execute the instructions and cause the system to: receive a channel identifier associated with at least one channel; generate at least one identifier for use with an application, wherein the at least one identifier includes at least one identifier segment and the identifier segment is associated with the at least one channel identifier; and send the at least one identifier to a resolution provider. The at least one processor may be further configured to associate the at least one identifier with at least one media item and information; send, to the resolution provider, the at least one identifier; and send, to the resolution provider, the information that is associated with the at least one identifier. The at least one processor may be further configured to encode the at least one media item with the at least one identifier; and broadcast, to one or more user devices, the at least one media item that is encoded with the at least identifier. The associated information may be at least one of a URL, a URI, or data for use by the application, and wherein the at least one media item comprises at least one of a sound clip, a music clip, a video, an image, a picture, a signal, or data. The at least one processor may be further configured to receive an authentication item from the resolution provide; generate a shared secret; and send the shared secret to the resolution provider. The at least one processor may be further configured to encode the at least one media item with the at least one identifier and the authentication item. The at least one processor may be further configured to provide the at least one media item that is encoded with the at least identifier and the authentication item to one or more user devices.

In another example embodiment, the present disclosure is directed to a computer-implemented method for storing watermarks, comprising: receiving, using at least one computer, a request for generation of at least one authentication item; generating an authentication item based on the request, wherein the authentication item is associated with at least one channel identifier; sending the generated authentication item to an entity; receiving an identifier, information associated with the identifier, and information about a media item associated with the identifier, wherein the identifier is associated with the authentication item, and includes at least one identifier segment; and storing the identifier, the information associated with the identifier, and the information about the media item associated with the identifier, in association with one another, wherein the at least one identifier segment is associated with the at least one channel identifier.

In another example embodiment, the present disclosure is directed to a system for storing watermarks, comprising: at least one storage device storing instructions; and at least one computer processor configured to execute the instructions and cause the system to: receive a request for generation of at least one authentication item; generate an authentication item based on the request, wherein the authentication item is associated with at least one channel identifier; send the authentication item to an entity; receive an identifier, information associated with the identifier, and information about a media item associated with the identifier, wherein the identifier is associated with the authentication item, and includes at least one identifier segment; and store the identifier, the information associated with the identifier, and the information about the media item associated with the identifier, in association with one another wherein the at least one identifier segment is associated with the at least one channel identifier.

In another example embodiment, the present disclosure is directed to a computer-implemented method for resolving identifiers, comprising: receiving, by a user device, a media item associated with at least one identifier, wherein the identifier includes at least one identifier segment associated with at least one channel identifier; causing the at least one identifier to be decoded; sending, to a resolution provider, a request including the at least one identifier; receiving information from the resolution provider, wherein the information is associated with the at least one identifier; identifying, by the user device, at least one application operating on the user device that is authorized to receive the information associated with the at least one identifier, based on at least one of the content of the identifier or the channel identifier; and delivering the information to the at least one application that is identified. The at least one identifier may be embedded in the media item, and the identifying the at least one application includes determining, using a certificate, that the at least one application is authorized to receive the information associated with the at least one identifier. Identifying the at least one application may include determining that the at least one application is subscribed to a channel associated with the channel identifier. The method may further comprise transmitting, from at least one requesting application of the user device, a request to subscribe to the channel associated with the channel identifier. The method may further comprise receiving an indication that the request to subscribe to the channel is granted. The request to subscribe to the channel may include at least one authentication item, the method further including receiving at least one of a certificate validation message and a shared secret.

In another example embodiment, the present disclosure is directed to a system for resolving identifiers. The system comprises: at least one storage device storing instructions; and at least one computer processor configured to execute the instructions and cause the system to: receive media associated with at least one identifier, wherein the identifier includes at least one identifier segment associated with at least one channel identifier; cause the at least one identifier to be decoded; send, to a resolution provider, a request including the at least one identifier; receive information from the resolution provider, wherein the information is associated with the at least one identifier; identify at least one application operating on the user device that is authorized to receive the information associated with the at least one identifier, based on at least one of the content of the identifier or the channel identifier; and deliver the information to the at least one application that is identified. The at least one identifier may be embedded in the media, and when the at least one process is configured to identify the at least one application, the at least one processor may be further configured to determine, using a certificate, that the at least one application is authorized to receive the information associated with the at least one identifier. When the at least one processor is configured to identify the at least one application, the at least one processor may be further configured to determine that the at least one application is subscribed to a channel associated with the channel identifier. The at least one processor may be further configured to transmit, from at least one requesting application of the user device, a request to subscribe to the channel associated with the channel identifier. The at least one processor may be further configured to receive an indication that the request to subscribe to the channel is granted. The request to subscribe to the channel may include at least one authentication item, and wherein the at least one processor may be further configured to receive at least one of a certificate validation message and a shared secret.

### BRIEF DESCRIPTION OF THE DRAWINGS

The accompanying drawings, which are incorporated in and constitute a part of this disclosure, illustrate aspects consistent with the present disclosure and, together with the description, serve to explain advantages and principles of the present disclosure. In the drawings:
FIG. 1 illustrates an example of registering and using a resource identifier in an enhanced audio signal transmitted in connection with a television signal, consistent with certain disclosed embodiments;
FIG. 2 illustrates an example system for registering and using a resource identifier in an enhanced audio signal, consistent with certain disclosed embodiments;
FIG. 3 illustrates an example of a process for registering and using resources and resource identifiers in an enhanced audio signal, consistent with certain disclosed embodiments;
FIG. 4 illustrates an example of a process for registering and using resources and resource identifiers to be used in enhanced audio signals, consistent with certain disclosed embodiments;
FIG. 5 illustrates an example of a process for registering and using resources and resource identifiers to be used in enhanced audio signals, consistent with certain disclosed embodiments;
FIG. 6 illustrates another example system for registering and using a resource identifier in an enhanced audio signal, consistent with certain disclosed embodiments;
FIG. 7 is a flowchart illustrating an example process for encoding, delivering, and processing watermarked media and/or signals, consistent with certain disclosed embodiments;
FIG. 8 is a flowchart illustrating an example process for receiving and processing watermarked media and/or signals, consistent with certain disclosed embodiments;
FIG. 9 is a flowchart illustrating an example process for authenticating subscriptions and sending data gathered from watermarked media and/or signals to applications authenticated to have such subscriptions, consistent with certain disclosed embodiments;
FIG. 10 is a flowchart illustrating an example process for requesting and generating a certificate and enabling a publisher to generate watermarks, consistent with certain disclosed embodiments;
FIG. 11 is a flowchart illustrating an example process for requesting a subscription to a channel, consistent with certain disclosed embodiments; and
FIG. 12 is a flowchart illustrating an example process for creating, storing, and delivering information related to watermarked media and/or signals, consistent with certain disclosed embodiments.

### DETAILED DESCRIPTION

Embodiments of the systems and methods described herein enable a user to access a resource identified by data contained in an audio signal transmitted to a user device. The audio signal may be in the form of an acoustic or sound wave or a radio or other electromagnetic wave, for example. The audio signal may be audible, partially inaudible, or wholly inaudible to humans, while the data may be carried by or embedded in the audio signal using any number of methods or techniques, including, for example, digital watermarking or digital fingerprinting. For example, resource identifier data representing or pointing to a resource may be superimposed on an audio signal by appropriate modulation of the audio signal such that the resource identifier data is conveyed by and/or hidden within the audio signal. In one embodiment, the resource identifier may be encoded as an inaudible (to humans) data-carrying component that is added to an audio signal carrying musical content for user consumption. While the disclosed embodiments discuss encoding resources and/or resource identifiers in audio data, the embodiments may encompass encoding resources and/or resource identifiers in video or other data, whether analog and/or digital.

In either case, binary or other digitized data representing one or more resource identifiers may be captured from the audio signal by a user device to reference one or more resources or actions. Resource identifiers may identify resources directly, such as, for example, e.g., by internet protocol (IP) (e.g., IPv4, IPv6, etc.) or other network address, hostname or domain name, Uniform Resource Identifier (URI), Uniform Resource Number (URN), or URL, phone number, email address, a text message, an image file, a Short Message Service (SMS) location, a Multimedia Message Service (MMS) location etc. By way of example, and not limitation, other resources may include Media Access Control (MAC) addresses, Ethernet Hardware Address (EHA) addresses, Bluetooth addresses, an International Mobile Subscriber Identity (IMSI), a subscriber identity module or subscriber identification module (SIM), a Removable User Identity Module (R-UIM), an Internet eXchange (IPX), X.25, BLNA, a Global Positioning System (GPS) coordinate, or any other type of identifier. Resource identifiers may also include instructions for performing some action, such as, for example, receiving email, forwarding or sending email, deleting email, exchanging email, using other messaging protocols, such as, Post Office Protocol (POP), Internet Message Access Protocol (IMAP), Simple Mail Transfer Protocol (SMTP), or otherwise manipulating email or other messages, whether occurring in the link layer, internet layer, transport layer, or application layer.

Or, resource identifiers may identify resource indirectly by, for example, specifying indexes or pointers to a separate database that contains further information about how to access the referenced resources. In some embodiments, the indexes may be a single-bit or multi-bit indexes into the separate databases. In other embodiments, the indexes may be unique data strings that serve as indexes into the separate databases. The separate database may be provided by a third-party resolution service provider or resolution server. For example, an audio signal may embed a first URL as a resource identifier, the first URL pointing to a resolution server. Upon detecting the first URL in the audio signal, a user device may make an HTTP request to the resolution server, using the first URL, which may contain path or other data uniquely identifying the resource or resource identifier to the resolution server. The resolution server may then respond to the HTTP request by transmitting a second URL to the user device, the second URL pointing to a resource, such as a webpage, that the user device may then retrieve using the second URL.

In still other embodiments, resource identifiers may identify resources via a computer algorithm or logic capable of execution on the user device, for example via particular software installed on the user device in the form of an application, widget, or native software. Data embedded within the audio signal may further include information that may be used to authenticate the resource identifiers or resources, such as a Secure Sockets Layer (SSL) certificate or other encryption keys.

Embodiments of the systems and methods described herein may further request user confirmation prior to initiating an action and/or may provide options for how the user would prefer to take various actions, such as accessing a website, providing user location information, etc. Other embodiments include additional features and functionality such as including GPS-derived geo-location information as part of a Hypertext Transfer Protocol (HTTP) request sent to a resource provider so as to request a location-appropriate response, such as a request for the location of facilities nearest the requesting user, web pages in a language corresponding to the geo-location of the user, etc.

The disclosed embodiments provide a variety of benefits and features, such as improved user experience, seamless navigation to a destination relevant to consumer content, seamless direction of users to specific sites for marketing purposes, effective measurement of the impact of advertising, one-to-one direct response mechanisms for mass media broadcast advertising, and other benefits.

The following detailed description refers to the accompanying drawings. Wherever possible, the same reference numbers will be used throughout the drawings and the following description to refer to the same or like parts. While several exemplary embodiments and features are described herein, modifications, adaptations, and other implementations are possible, without departing from the spirit and scope of the disclosure. For example, substitutions, additions or modifications may be made to the components illustrated in the drawings, and the exemplary methods described herein may be modified by substituting, reordering or adding steps to the disclosed methods. Accordingly, the following detailed description is not intended to limit the disclosure to any specific embodiments or examples.

In some embodiments, an "audio signal" may refer to a signal that may be at least partially embodied in an acoustic signal, although the acoustic signal may be encoded within or decoded from a corresponding electronic or electromagnetic signal (e.g., digital, analog, or any combination thereof).

As one example, a digital audio signal may be processed, amplified, and supplied to an appropriate transducer such as a loudspeaker so as to generate a corresponding audible or inaudible (as to humans) sound wave or acoustic signal. In some embodiments, the acoustic signal may be transmitted in a region and detected by another device, such as a cellular telephone, smart phone, or other device having a microphone or other input means to detect and process an audio signal, which may include conversion of the audio signal into an electronic audio signal or other digital or electronic data.

In other embodiments, the audio signal may be received directly by an electronic device or system, such as a television, radio, smart phone, or other electromagnetic signal receiving device. The device may process the electronic signal and produce one or more acoustic signals at one or more frequencies. In other embodiments, the device may process the audio signal to recover data so that it may take some further action. For example, the device may process the audio signal, and then transmit the decoded data for further processing, such as by sending the decoded data to a separate resolution server via the Internet so that a URL or an IP address can be obtained.

In some embodiments, an "enhanced" audio signal may refer to an audio signal that, in addition to encoding audio content data for consumption by users, also includes resource identifier data that may be used to retrieve or identify a resource or action, such as a webpage, a URI, a URL, or a URN for a website or other resource, an email address, a text message, an image file, an SMS location, a MMS location, etc. The resource identifier data may be encoded within the audio signal such that its auditory effect on the audio content data otherwise encoded within the audio signal is partially or entirely non-perceptible by a human user, non-comprehensible by a human user, or both.

Resource identifier data may be encoded within the audio signal in a "non-perceptible" manner by virtue of being associated with a frequency range at which humans are typically unable to perceive sound (e.g., below 20 Hz or above 20 kHz). Resource identifier data may be encoded within the audio signal in a "non-comprehensible" manner such that, while a user may perceive sound associated with the encoding of the resource identifier data, the user could not, or would not be expected to, perceive or understand the resource identifier data itself or the significance of the resource identifier data within the sound. For example, resource identifier data encoded within the audio signal in a non-comprehensible manner may be perceived by the user as a constant tone, random noise, or a sound just at the edge of the user's hearing, but without the user understanding any information conveyed by or encoded in the sound.

In some embodiments, a sound associated with resource identifier data encoded within an audio signal may be perceptible and at least partially comprehensible by a user, but not for purposes of identifying or understanding the encoded resource data. For example, an audio signal may include a series of tones at frequencies that a user can hear, but the user may not be able to determine that the signal includes resource identifier data encoded in the signal. As a specific example, a theme song or commercial "jingle" may be used to direct a user's device to a website or other resource associated with the song, such as, for example, a website for the advertised product, a telephone number at which a prerecorded message can be heard, etc. Thus the acoustic signal perceived by the user may be a combination of an intelligible audio component, such as speech, and a non-comprehensible audio component encoding resource identifier or other data that is primarily or solely machine-readable or machine-intelligible. In this embodiment, the distinctive sound may be identified (e.g., by fingerprinting) and associated with one or more resources to be accessed and/or actions to be initiated.

Resource identifiers may comprise pre-registered unique identifiers that allow user devices to retrieve specific resources related to the human-comprehensible content of the audio signal. A resource identifier may be, for example, an identifier that has previously been associated with a URI, URL, and/or URN of a website or other resource on a separate resolution server, or it may be a URI, URL, URN or another representation of the resource itself.

A resource or resource identifier may be registered with a central database, such as a resolution server or resource provider server, by an entity broadcasting or publishing the content or a portion of the content, such as an advertiser that provides advertisements for presentation or broadcast during other content. For example, a resource may provide the user further details about the content being consumed and/or may facilitate a marketing or public service campaign. In some embodiments, the resource may be updated without a need to update and/or change the resource identifier. That is, the association between a given resource identifier and a resource may be updated to reflect a change in the resource to which the resource identifier points.

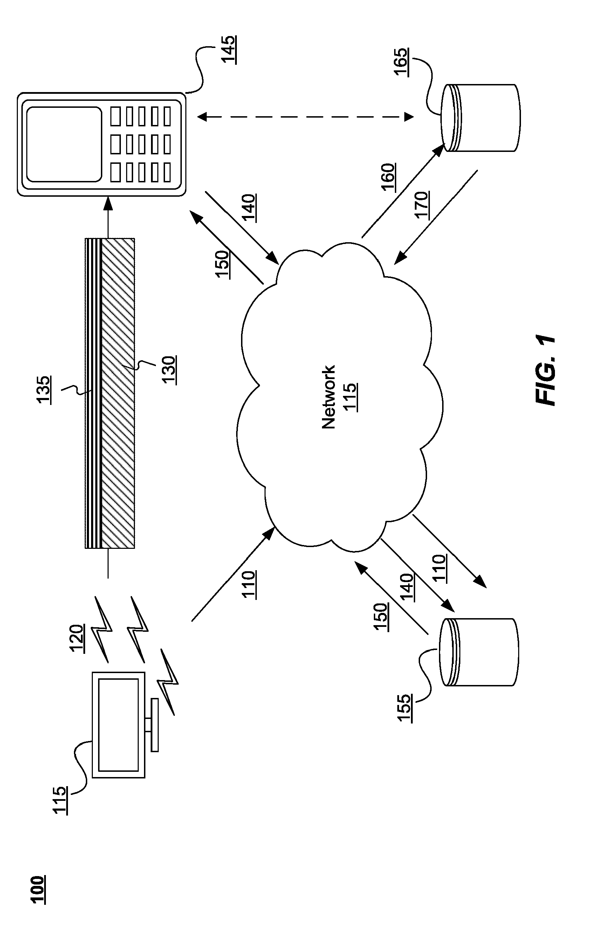

FIG. 1 depicts an exemplary system and process for using an enhanced audio signal to provide access to a resource. In FIG. 1, an enhanced audio signal is transmitted in connection with a television broadcast. Although a television broadcast is disclosed in the example of FIG. 1, the systems and methods disclosed herein may be incorporated in any form of audio signal, such as, for example, radio signals, streaming signals, pre-recorded audio signals, pre-recorded and live broadcast audio, etc. In addition, the systems and methods disclosed herein may be employed in an audio signal that is selectively broadcast to a specific group of people such as, patrons at a sales kiosk, an information terminal (e.g., airport flight arrival and departure display), or a shopping mall or other large area that might typically provide background music or include, for example, a public address system.

Referring to FIG. 1, resource information such as a URL, a domain name, or other resource information may be registered (element 110) with one or more central databases or other registries, such as a resolution server (element 155) via a network (element 115). A unique identifier associated with the resource information also may be registered in the one or more central databases or registries. For example, a domain name or URL may be registered with the one or more central databases or registries and associated with a resource identifier or other identifier encoded in an enhanced audio signal. In some embodiments, the resource identifier itself may be a domain name or a URL

Still referring to FIG. 1, an enhanced audio signal may be created and the resource identifier embedded, encoded, or otherwise incorporated into the audio signal and broadcast (element 120) by a television or television signal broadcaster (element 115), before and/or after the resource identifier is registered with one or more central databases or registries. As illustrated in FIG. 1, the embedded or encoded signal (element 135) may form a smaller portion of the audio signal relative to the portion of the audio signal that contains content for normal user consumption (element 130), such as music, speech, or other human-perceptible and/or -comprehensible audio content. Various techniques of incorporating information into an audio signal are known in the art, and the use of appropriate techniques to incorporate the identifier into an enhanced audio signal will be readily understood by those skilled in the art.

The enhanced audio signal may then be transmitted to one or more user devices, such as during or as part of a TV, radio, or other multicast signal or by a TV, radio, or other device. That is, the enhanced audio signal may comprise the radio or other electromagnetic waves transmitted by a device, such as a broadcast device, or an acoustic representation of the electromagnetic signal produced by a receiving device, such as a television or radio. In the former scenario, a user device may receive the electromagnetic signal directly from the broadcasting device, and may extract one or more resource identifiers from the electromagnetic signal. In the latter scenario, a user device may receive the acoustic sound waves from the electromagnetic signal-receiving device, such as a television or radio, and may extract one or more resource identifiers from the acoustic sound waves.

In either case, resource identifier data may be provided within the same audio signal that contains audio content for user consumption or may be transmitted in a separate audio signal concurrently with the "primary" audio signal that contains the user content. A user may activate an application, such as a software application, on the user device (element 145) to access the enhanced audio signal (elements 130 and 135). For example, a user watching a TV broadcast may activate an application on the user device to obtain additional information about the content of the broadcast, access a related website or other resource, etc.

As a specific example, the user may activate an application on a smart phone, personal computer, or other similar device by entering a predefined sequence (e.g., #555) or actuating a button on the device. The user may be informed of the presence of the enhanced audio signal such as by regular announcements on the channel the user is watching, signs or announcements in a location such as a shopping mall or airport, or any other suitable mechanism. Alternatively, a device may be operated in a monitoring mode to detect electromagnetic or acoustic signals including an enhanced audio signal component, the device alerting the user to the presence of data such as the availability of additional information provided by the audio signal, such as an informational website designated, a telephone number, etc.

When the user activates the application, the application may receive the enhanced audio signal and may access or decode one or more resource identifiers embedded within the signal. The application or device may then access the resources specified by the one or more resource identifiers, such as by downloading a webpage or file, sending a text message, making a phone call, etc. For example, the resource identifier may comprise a URL in the form of "http://www.momandpopshop.com/deals/promotions/winter_sale coupon.html". Upon detecting this URL resource identifier, the application or device may make an HTTP request 160 to resource provider server 165 for the resource associated with the URL "http://www.momandpopshop.com/deals/promotions/winter_sale coupon.html", which may be provided to device 145 in an HTTP response 170 in the form of an HTML file representing a webpage.

Alternatively, the application or device may send a request that includes the one or more resource identifiers, or a portion or portions thereof, to the one or more central databases or other registries made available by a resolution server 155, which in turn may respond to the application or device by sending information on how to access the resources associated with the resource identifiers from one or more resource providers (element 150).

For example, the resource identifier may comprise a URL in the form of "http://www.resolvecom.com/resolve.aspx?resource_id=0702021308220624", the domain name of which may be hosted by resource provider 165. The application or device may extract this resource identifier/ URL from the enhanced audio signal. The application or device may then send an HTTP request 140 to resolution server 155, specifying the URL "http://www.resolvecom.com/resolve.aspx?resource_id=0702021308220624". The resolution server 155 may then look up information about the resource associated with the unique identifier "0702021308220624" in a database or other memory structure, which may reveal that the requested resource may be retrieved using the URL "http://www.momandpopshop.com/deals/promotions/winter_sale_coupon.html".

Thus, resolution server 155 may send an HTTP response 150 to device 145 that includes the URL "http://www.momandpopshop.com/deals/promotions/winter_sale_coupon.html". Upon receiving this information about how to access the requested resource associated with the resource identifier, device 145 may make an HTTP request 160 to resource provider server 165 for the resource associated with the URL "http://www.momandpopshop.com/deals/promotions/winter_sale_coupon.html", which may be provided to device 145 in an HTTP response 170 in the form of an HTML file representing a webpage.

Resolution server 155 and/or resource provider server 165 may also record a history of requests from particular devices and/or users in order to build profiles that can be used to better target information to users.

A resource identifier may be embedded within in or extracted from an audio signal in a variety of ways, such as digital watermarking or digital fingerprinting. For example, "digital watermarking" is the process of embedding information into a digital signal in a way that is difficult to remove, i.e., if the signal is copied then the information is also contained in the copy. In an embodiment, one or more resource identifiers or frequencies (i.e., watermarks) may be embedded in the content being consumed to enable the broadcaster to point the user to a particular destination. That is, the resource identifier included in the enhanced audio signal may be embedded in the form of a watermark applied to the signal, or may be otherwise related to or derivable from such a watermark.

As another example, "fingerprinting" is a technique in which software or hardware identifies, extracts, and then compresses characteristic components of a signal, enabling that signal to be uniquely identified by its resultant "fingerprint." Content providers and other identifiers as described herein may leverage the concept of fingerprinting, especially for pre-recorded content. For example, URLs or other resource identifiers may be encoded within a fingerprint of an audio signal. When a user device receives the audio signal, it may calculate or extract the fingerprint using the same technique that was used to create the fingerprint initially, and look up the resource identifier based on the fingerprint.

An exemplary resource may include one or more web pages that are identified based on a URL. In such an embodiment, the URL may be the identifier included in an enhanced audio signal. As another exemplary destination resource, in cases when the user's device is not connected to the Internet, such as where a user's mobile device does not subscribe to a data plan, the device may be directed to a pre-configured phone number. For example, a software application on the device may communicate with one or more central databases or registries, such as a resolution server, via text messaging, such as, SMS, MMS, etc., after which a response from the central database may prompt the device to call a phone number provided by the central database.

Other exemplary resources may include a file, folder, or other item stored on the device performing detection of the enhanced audio signal. For example, if the application is designed to receive discount coupons as a user walks into a shopping mall based on an enhanced audio signal being transmitted in the mall, the device may detect the identifier in the music being played in the store and accept the relevant digital coupons being transmitted by, for example, the public address system in the mall. The coupons may be stored on the device, thus making the destination resource a storage space on the device.

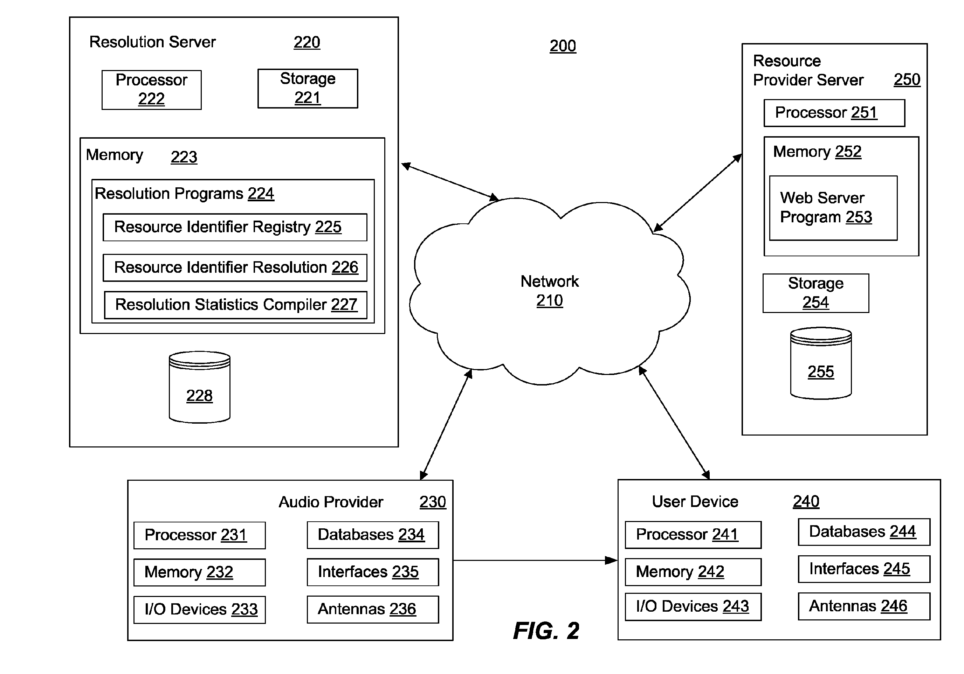

FIG. 2 is a diagram illustrating an exemplary system 200 that may be used to implement disclosed embodiments, including exemplary system components. The components and arrangement, however, may be varied. Exemplary system 200 of FIG. 2 may include network 210, resolution server 220, audio provider 230, resource provider server 250, and user device 240. Resolution server 220 may include a processor 222, a memory 223, input/output (I/O) devices (not shown), and storage 221. Resolution server 220 may be implemented in various ways. For example, resolution server 220 may be a general purpose computer, a server, a mainframe computer, or any combination of these components. Resolution server 220 may communicate over a link with network 210. For example, the link may be a direct communication link, a LAN, a WAN, or other suitable connection. Network 210 may, for example, include the Internet or telephony network. Resolution server 220 may be standalone or it may be part of a subsystem, which may, in turn, be part of a larger system, such as a legacy domain registration system.

Memory 223 may include one or more storage devices configured to store information used by processor 222 to perform certain functions related to the disclosed embodiments. Storage 221 may include a volatile or non-volatile, magnetic, semiconductor, tape, optical, removable, non-removable, or other type of storage device or computer-readable medium. In one embodiment, memory 223 may include one or more resolution programs or subprograms 224 loaded from storage 221 or elsewhere that, when executed by resolution server 220, perform various procedures, operations, or processes consistent with disclosed embodiments. Memory 223 may be also be configured with an operating system (not shown) that performs several functions well known in the art when executed by resolution server 220. The choice of operating system, and even to the use of an operating system, is not critical to any embodiment.

Memory 223 may also include a resource identifier registry program 225 for registering resources or resource identifiers, a resource identifier resolution program 226 for mapping index identifiers to resource identifiers, and a resolution statistics compiler 227 for building user profiles based on resources requested by users. Resolution server 220 may include one or more I/O devices (not shown) that allow data to be received and/or transmitted by resolution server 220. I/O devices may also include one or more digital and/or analog communication input/output devices that allow resolution server 220 to communicate with other machines and devices. The configuration and number of input and/or output devices incorporated in I/O devices may vary as appropriate for certain embodiments.

Resolution server 220 may also be communicatively connected to one or more data repositories 228. Data repository 228 may include one or more files or one or more relational and/or non-relational databases that store information and are accessed and/or managed through resolution server 220. The databases or other files may include, for example, data and information related to registered resources and resource identifiers, index identifiers, and mappings there between, as well as user profile data based on previous user requests.

As shown in FIG. 2, each audio provider 230 may include one or more of the following components: at least one processor 231 configured to execute computer program instructions to perform various processes and methods, at least one memory device 232 configured to access and store information and computer program instructions, I/O devices 233, databases 234 to store tables, lists, or other data structures, interfaces 235, antennas 236, etc. Each of these components is well-known in the art and will not be discussed further.

As also shown in FIG. 2, each user device 240 may include one or more of the following components: at least one processor 241 configured to execute computer program instructions to perform various processes and methods, at least one memory device 242 configured to access and store information and computer program instructions, I/O devices 243, databases 244 to store tables, lists, or other data structures, interfaces 245, antennas 246, etc. Although not shown, each user device 240 may include one or more programs configured to access network 210, and display information received via network 210 via a browser, such as a web browser. Each of these components is well-known in the art and will not be discussed further.

Resource provider server 250 may include a processor 251, memory 252, input/output (I/O) devices (not shown), and storage 254. Resource provider server 250 may be implemented in various ways. For example, resource provider server 250 may be a general purpose computer, a server, a mainframe computer, or any combination of these components. Resource provider server 250 may communicate over a link with network 210. For example, the link may be a direct communication link, a LAN, a WAN, or other suitable connection. Resource provider server 250 may be standalone or it may be part of a subsystem, which may, in turn, be part of a larger system, such as a legacy domain registration system.

Memory 252 may include one or more storage devices configured to store information used by processor 251 to perform certain functions related to the disclosed embodiments. Storage 254 may include a volatile or non-volatile, magnetic, semiconductor, tape, optical, removable, non-removable, or other type of storage device or computer-readable medium.

In one embodiment, memory 252 may include one or more web server programs or subprograms 253 loaded from storage 254 or elsewhere that, when executed by resource provider server 250, perform various procedures, operations, or processes consistent with disclosed embodiments. Memory 252 may be also be configured with an operating system (not shown) that performs several functions well known in the art when executed by resource provider server 250. The choice of operating system, and even to the use of an operating system, is not critical to any embodiment. Web server program 253 may be configured to register resources or resource identifiers, map index identifiers to resource identifiers, and build user profiles based on resources requested by users.

Resource provider server 250 may include one or more I/O devices (not shown) that allow data to be received and/or transmitted by resource provider server 250. I/O devices may also include one or more digital and/or analog communication input/output devices that allow resource provider server 250 to communicate with other machines and devices. Resource provider server 250 may receive data from external machines and devices and output data to external machines and devices via I/O devices. The configuration and number of input and/or output devices incorporated in I/O devices may vary as appropriate for certain embodiments.

Resource provider server 250 may also be communicatively connected to one or more data repositories 255. Data repository 255 may include one or more files or relational and/or non-relational databases that store information and are accessed and/or managed through resource provider server 250. The databases or other files may include, for example, data and information related to registered resources and resource identifiers, index identifiers, and mappings there between, as well as user profile data based on previous request user requests.

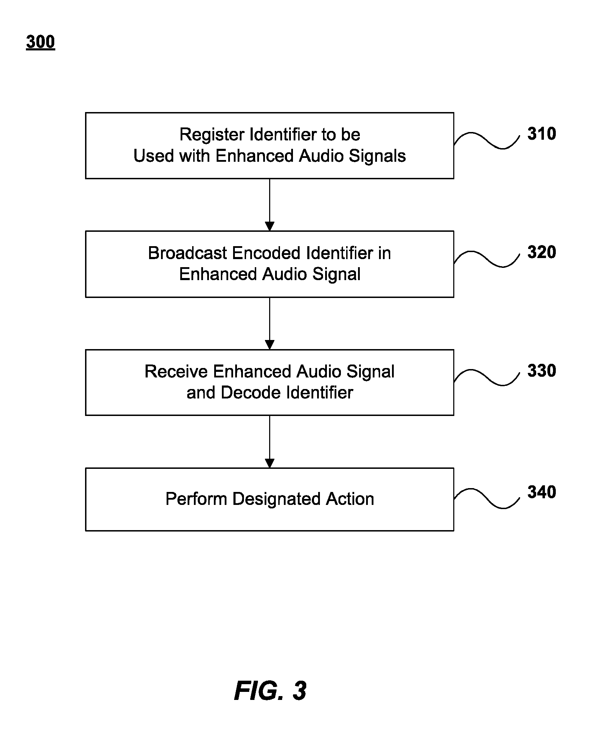

FIG. 3 presents an exemplary flow chart 300 illustrating a method of registering and using one or more resource identifiers in an enhanced audio signal. In the embodiment presented in FIG. 3, a domain name or similar resource identifier may be transmitted to a user device via an enhanced audio signal. In FIG. 3, one or more resource identifiers, such as, for example, a domain name, that is to be used with an enhanced audio signal, may be registered in a central database (310). An enhanced audio signal, such as an electromagnetic signal or acoustic waves, encoding the one or more resource identifiers is broadcast or otherwise transmitted to a user device (320). A user device, such as, for example, a smart phone, detects the enhanced audio signal and extracts and/or decodes the embedded one or more resource identifiers (330). The user device may perform some appropriate and/or designated action (340) associated with the one or more embedded resource identifiers, such as, for example, initiating and running an appropriate application in response to the one or more resource identifiers, requesting a network resource such as a webpage corresponding to the resource identifier, sending an email, calling a telephone number, etc.

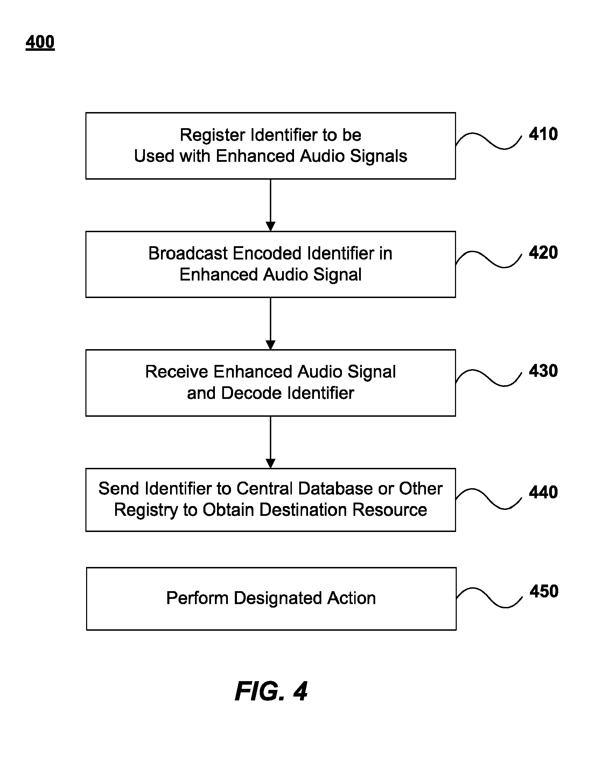

FIG. 4 is a flowchart 400 illustrating a method of registering and using the one or more resource identifiers in an enhanced audio signal. In the embodiment illustrated by FIG. 4, one or more resource identifiers used to obtain one or more resources are transmitted to a user. In FIG. 4, the one or more resource identifiers that are to be used with an enhanced audio signal and the associated resources are registered in a database, such as, for example, one or more central databases or other registries (410). An enhanced audio signal encoding the one or more resource identifiers is broadcast or otherwise transmitted (420). A local device, such as, for example, a smart phone, detects the acoustic signal, receives the enhanced audio signal, and extracts and/or decodes the embedded one or more identifiers (430).

In the embodiment of FIG. 4, the local device may send the one or more resource identifiers, or a portion or portions thereof, to the central registry to obtain information on how to access the one or more resources (440). The user device performs some appropriate and/or designated action in connection with the information provided by the central registry to obtain the resources (450), such as, for example, initiating and running an appropriate application, requesting a network resource such as a webpage corresponding to the one or more resource identifiers, generating an email, calling a telephone number, etc. In some embodiments, the appropriate and/or designated actions (450) may include, for example, resolving a URI, URN, and/or URL to an IP address, requesting a web page associated with that IP address, etc.

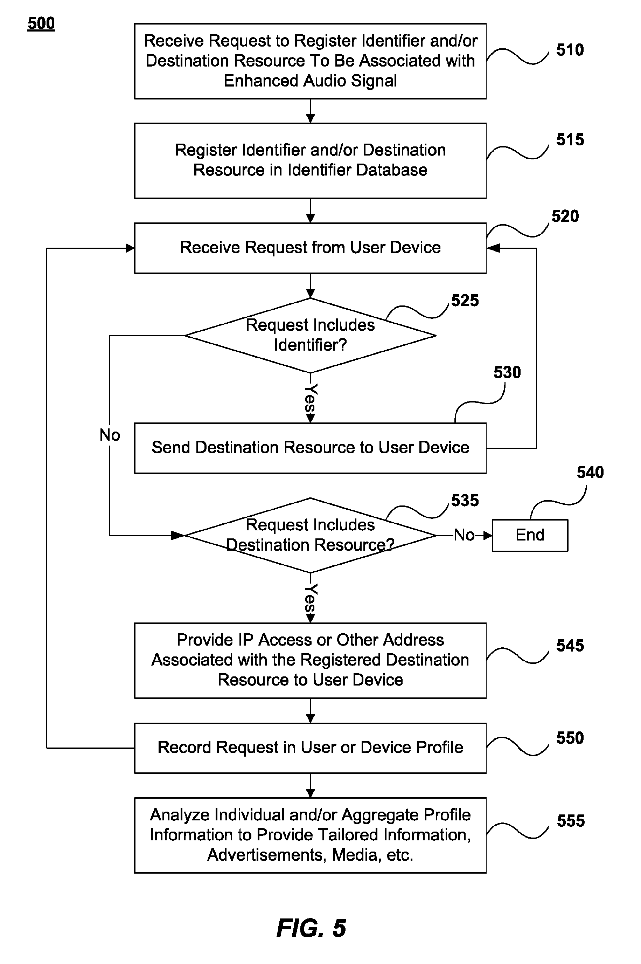

FIG. 5 is a flow chart 500 illustrating a method of registering resource identifiers to be used in enhanced audio signals. Initially, a request is received to register a resource identifier (510). In some embodiments, the resource identifier may be an index into the central database and/or other registry, and may be used to obtain associated resources. The request may be sent by any type of entity, including, for example, a resource provider, such as a retailer, a marketer, or any other type of organization; or one or more individuals, etc. The central database and/or other registry associates the resource identifier with information on how to access a resource associated with the resource identifier and registers or stores this information pairing in a database (520).

Next, a request sent from a user device may be received by the central database or other registry (530). The request may include the resource identifier or a portion thereof. Next, the central database or registry resolves the resource identifier by looking up the resource identifier (or portion thereof) in the database and locating resource access information associated with the resource identifier (530), which may then be sent to the user device (540).

In some embodiments, the request may then be recorded by the central database or registry (550), for example, noting the requesting user device, the requested resource or resource identifier, the resource access information provided to the user device, the resource identifier registrant, etc. An analysis (555) may then be performed on the recorded requests to analyze individual and/or aggregate profile information in order to provide tailored information to the user, such as advertisements, media, etc. For example, the central database, software or hardware on a user device enabling the service, or another device may collect details regarding the user's activities, which may enable the central database or registry to develop intelligence on real-time response to the broadcast material, develop content consumption habits of the users, help advertisers better target commercials and content to the user, develop customized destination for each user or group of users, and perform other similar functions. For example, the central database may maintain a profile of each user and/or user device that requests identifiers obtained via enhanced audio signals.

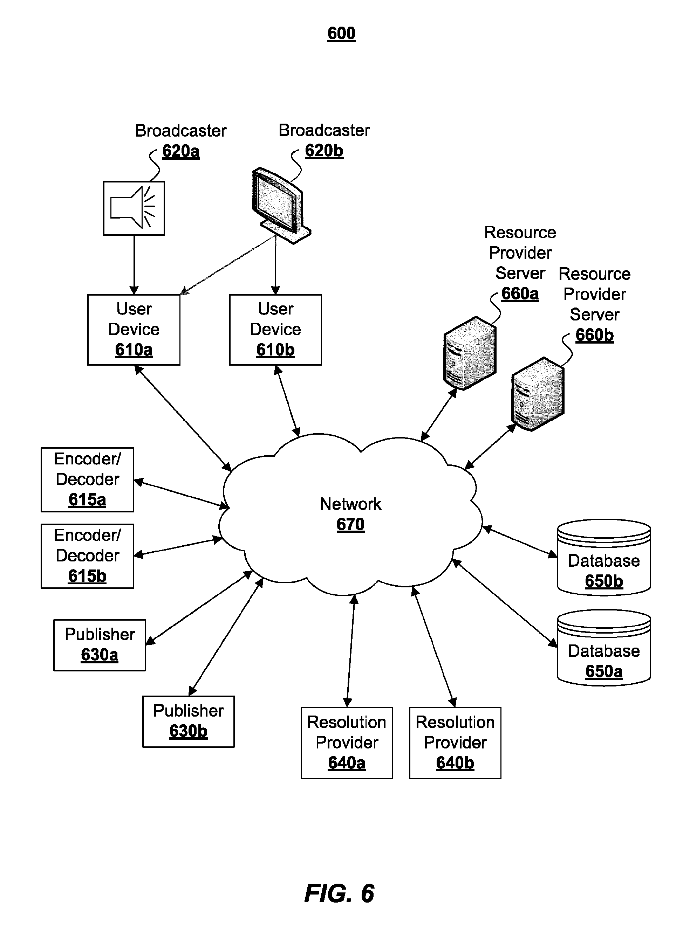

FIG. 6 is a block diagram of an example system 600 for creating watermarked media signals, extracting and decoding embedded watermarks, identifying information associated with extracted watermarks, and performing actions in response to the identified information, consistent with certain disclosed embodiments. System 600 may include one or more user devices 610 (e.g., user device 610a and user device 610b), one or more encoders/decoders 615 (e.g., encoder/decoder 615a and encoder/decoder 615b), one or more broadcasters 620 (e.g., broadcaster 620a and broadcaster 620b), one or more publishers 630 (e.g., publisher 630a and publisher 630b), one or more resolution providers 640 (e.g., resolution provider 640a and resolution provider 640b), one or more databases 650 (e.g., database 650a and database 650b), one or more resource provider servers 660 (e.g., resource provider server 660a and resource provider server 660b), and network 670.

User devices 610 can be any type of computing device, electronic device, and/or component configured to execute one or more processes, consistent with the disclosed embodiments, such as those discussed above in connection with user devices 145 of FIG. 1. In some aspects, user devices 610 can be configured to transmit and/or receive information to and/or from other user devices 610, broadcasters 620, publishers 630, resolution provider server 640, databases 650, resource provider servers 660, and/or network 670 directly and/or indirectly via any combination of wired and/or wireless communication systems, method, and devices. In the example embodiments disclosed herein, user devices 610 are illustrated as mobile computing devices.

Encoders/decoders 615 may include the software and/or hardware by which information from a source is converted into symbols to be communicated (i.e., encoder), and the software and/or hardware by which the converted or encoded symbols are transformed back into information understandable by a receiver (i.e., decoder). That is, an encoder may include any combination of device, circuit, transducer, software program, or algorithm configured to convert information from one format or code to another, typically for the purposes of standardization, speed, secrecy, security, or saving space by shrinking size. A decoder may include any combination of device, circuit, transducer, software program, or algorithm configured to perform the reverse operation of an encoder so that encoded information can be retrieved. Generally, the same processes used to encode information are reversed to decode the encoded information. In some embodiments, encoders / decoders may be used to transform information for embedding as a watermark within a carrier signal. In some embodiments, encoders / decoders 615 may be used by any of user devices 610, broadcasters 620, publishers 130, resolution providers 640, resource providers 660, or registrars (not shown). Further, although illustrated as separate from each of user devices 610, broadcasters 620, publishers 130, resolution providers 640, resource providers 660, one or more encoders/decoders 615 may be implemented in one or more of user devices 610, broadcasters 620, publishers 130, resolution providers 640, resource providers 660.

Although not shown, user device 610 can include one or more mechanisms and/or devices by which user device 610 can perform the methods as described herein. These mechanisms and/or devices can include any combination of hardware and/or software components and can be included, in whole or in part, in any of the components shown, for example, in user device 110 of FIG. 1B. For example, user device 610 may include one or more codecs, one or more interleavers, one or more circular buffers, one or more multiplexers, one or more permuters, one or more arithmetic logic units and/or their constituent parts, etc. User device 610 may also include a power source (not shown) that provides an appropriate alternating current (AC) or direct current (DC) to power one or more components of user device 610.

Returning to FIG. 6, broadcasters 620 may be any type of electronic device and/or component, such as those disclosed above in connection with broadcasters 120 of FIG. 1, and configured to execute one or more processes, consistent with the disclosed embodiments. For example, broadcasters 620 can include any type of entity and/or device configured to, or be capable of, transmitting or broadcasting digital media or carrier signals having embedded watermarks, such as those disclosed herein. In some embodiments, broadcasters 620 may be entities configured to provide, via one or more broadcast distribution mechanisms, one or more media signals and/or data feeds, targeted to devices that have the capability to receive and process those media signal streams and/or data feeds. The distribution mechanism, as used herein, is generically referred to as "channels." In some aspects, a channel may refer to a communication channel. A communication channel may include a physical transmission medium (e.g., cable, wire, etc.) or a logical connection over a multiplexed broadcast medium (e.g., radio, microwave, satellite, infrared, etc.) that can be used to convey an information signal from one or more senders to one or more receivers. Channels may further include image channels, such that each color component of an image (e.g., R, G, and B of an RGB image; C, M, Y, and K of a CMYK image; Hue, Saturation, and Value of an HSV image, etc.) may have a corresponding channel. An image channel may also correspond to a range of wavelengths in any of the visible spectrum or the invisible spectrum (e.g., multispectral, hyper spectral, etc.). Channels, whether image or audio, may be created through any combination of hardware and software.

The data carried on each channel may include at least one channel resource identifier. As used herein, a channel resource identifier may be a value used in association with information stored by a resolution provider (e.g., a value that provides an index to information stored in a resolution provider, a registry, and/or database, etc.). In some embodiments, a channel resource identifier may include resource identifiers, such as the resource identifiers discussed above. Channel resource identifiers can be encoded and embedded as an audio watermark, such that a computing device can receive the audio signal, extract the embedded watermark, decode the watermark to obtain the identifier, and request the information associated with the identifier from a registry. In certain embodiments, channel resource identifiers may be encoded in a predefined bit scheme, e.g., a 48-bit scheme. In such embodiments, the first set of bits, e.g., 10 bits, of an encoded channel resource identifier may be used to represent a channel. As an example embodiment, a first set of 10 bits may be used to identify the channel in which watermarks associated with that publisher are embedded, and thus define that publisher's unique "namespace." In one example, an encoding application or application programming interface (API) may be programmed to create watermarks containing that publisher's unique 10-bit sequence. This 10-bit channel sequence may, in some embodiments, be enforced and defined by the certificate issued to the publisher that corresponds to the 10-bit channel sequence.

Further, in such embodiments, the next set of bits, e.g., 14 bits, of a channel resource identifier may be used to represent a "sub-channel." That is, a publisher can further segment a channel or namespace defined by the first set of bits, e.g., 10 bits, into various sub-channels or sub-namespaces. The 14 bits in the sub-channel can be used by a publisher to segregate between entities, allowing different entities to have separate namespaces. For example, a car company using watermarks to advertise multiple lines of cars (e.g., a luxury line, a mid-grade line, and an economy line) may wish to have one sub-channel for first line of cars, a second sub-channel for a second line of cars, and a third sub-channel for a third line of cars. In some implementations, a publisher may use sub-channels to distinguish between entities that offer separate and non-overlapping distribution channels, such as, for example, retailers, wholesalers, drop-shippers, advertising agencies, etc. In still other implementations, a publisher may use sub-channels to segment between geographical regions. For example, a publisher may segment identifiers using different sub-channels that correspond to different locations when that publisher has a diverse global presence, such as, for example, North America, South America, the Middle East, etc.

In some embodiments, a third set of bits, e.g., 24 bits, of an encoded channel resource identifier may be allocated for use with unique items (e.g., as an "item ID"). The item ID can be associated, in some embodiments, to one or more media sources or carrier signals (such as, for example, an audio track or printed advertisement), which in turn, are associated with information in a database (such as, for example, a uniform resource identifier (URI), a uniform resource number (URN), a uniform resource locator (URL), an action, an algorithm, a function operable on a user's device, etc.).

While this third set of bits, in some embodiments, may not be unique with respect to all other item IDs in a database, the channel resource identifier would preferably be unique based on the combination of channel, sub-channel, and item ID. That is, while multiple items in a registry may have the same final third set of bits (i.e., the same "Item ID"), the combination of bits that comprise the channel resource identifier may be unique. While some embodiments are explained above with respect to 48 bits, any channel resource identifier size is possible. Additionally, any number of segments and segment sizes are possible. Moreover, in some embodiments, a "version" segment may be added to signify particular configurations of the channel resource identifier and/or its segments. Further, in embodiments, channel resource identifiers can be encrypted. A listener and/or registry can be used to decrypt channel resource identifiers when received/transmitted. Channel resource identifiers can be fully or partially encrypted (for example, the channel portion of the channel resource identifier could be unencrypted, while the rest may be encrypted).

As used herein, a hash may refer to a value returned by a hash function. A hash may also be referred to as a hash value, a hash code, a hash sum, or a checksum. A hash function may include any algorithm or subroutine configured to map or associate large data sets of variable length, called keys, to smaller data sets of fixed length. In some embodiments, a hash may be an identifier generated based on an input, such that the input cannot be derived from the identifier. For example, algorithms such as MD5, SHA-512 can be used to create hashes based on input. In some embodiments, algorithms such as HMAC can also be used, and such algorithms require a secret key to operate.

Publishers 630 can be any entity that is capable of and/or authorized to embed watermarks in a carrier signal for distribution or broadcast. In some embodiments, publishers 630 may also generate applications configured to perform the methods described herein, including, for example, create watermarked media signals, transmit watermarked media signals to one or more user devices 610, perform actions in response to identified information within or associated with watermarks, interact with one or more broadcasters 620, receive information from or based upon watermarks, etc. In some implementations, publishers 630 may also refer to the combination of electronic devices and/or software used by an entity that is configured to perform any or all of encoding identifiers or watermarks, embedding watermarks in digital media signals, transmitting watermarked digital media signals, etc. Such electronic devices can include, by way of example and not limitation, client or server computers, desktop or laptop computers, tablet computers, personal digital assistants (PDA), tablet PCs, telephony or smartphone devices, etc.

In some embodiments, publishers 630 may be capable of and/or authorized to control at least one broadcast distribution mechanism. Publishers 630 may also enable one or more broadcasters 620 and/or other third parties to distribute data or signals based on one or more specific channels they are authorized to use. In some embodiments, each channel may be associated with a single entity (e.g., a single publisher 630), and each entity can be associated with multiple channels. In some embodiments, channels may allow for secured distribution of watermarked content and/or secured access to information associated with watermarks. In some embodiments, the watermarks of each publisher 630 may be segmented from one another, such that the identifiers for each publisher 630 are encoded and embedded as watermarks and transmitted via different "channels." In such embodiments, access to watermarks from a particular publisher 630 may be restricted to programs and/or applications that are authorized to access a channel associated with a particular publisher 630.

Publishers 630 may also control applications that interact with and subscribe to their channels. In some embodiments, access to watermarks may be limited through the use of subscriptions to channels, referred to herein as channel subscriptions. In some implementations, a listener application executing on user device 610 may provide this service based on subscriptions associated with a processing application. Subscriptions may include any mechanism, including persistent mechanisms, by which a processing application on a computing device, such as user device 610, can be authorized to receive and decode watermarks. In some embodiments, subscriptions may allow processing applications to receive information associated with watermarks when the watermarks are associated with a channel to which the processing application is subscribed. For example, a processing application executing on user device 610 may subscribe to a channel associated with the publisher 630 of the application.

In some embodiments, a processing application could perform the subscription process through a communication with a listener application. In such embodiments, when the listener application receives a watermark tied to, or associated with, the channel to which the processing application is subscribed, the processing application would receive the watermark from the listener application and process the received watermark. If, however, a processing application executing on user device 610 is not subscribed to a particular channel, the listener application may receive the watermark, but may not send the watermark to the processing application. Thus, the processing application may be unable to receive information based on watermarks that are associated with that particular channel. In some embodiments, applications may be required to provide authentication in order to be granted access to a subscription.

In some embodiments, certificates may be used in order to perform such authentication process or processes, but other authentication schemes may be used. For example, certificates may be used when establishing a subscription to a channel. In some embodiments, certificates can also be used in managing the creation of identifiers within a channel by a publisher, such as publisher 630. As used herein, a certificate may be any persistent set of data, used during authentication of an application. Additionally, while some embodiments may use certificates to establish subscriptions or create identifiers within a channel, other data may be used to authenticate and/or authorize the creation/establishment of these subscriptions and identifiers. Data used by these schemes for purposes of authenticating/authorizing entities (such as, for example, publishers, registries, applications, or users) may be referred to generally as "authentication items," "authorization items," or "authentication/authorization items."

In some embodiments, an authentication mechanism may be used to limit the encoders / decoders to encoding / decoding watermarks corresponding to a specific channel. In still other embodiments, the authentication mechanism may use a certificate to limit the encoders / decoders to encoding / decoding watermarks corresponding to a specific channel. That is, in some embodiments, encoders may require one or more certificates before encoding and embedding watermarks into media or signals and/or decoders may require one or more certificates before extracting and decoding watermarks from media or signals.

Resolution providers 640 may include one or more entities configured to provide storage and retrieval of data. Although illustrated separately, resolution providers 640 can also include one or more servers, such as servers 660, and/or one or more databases, such as databases 650. In some embodiments, resolution providers 640 may receive and store certificates, identifiers encoded into watermarks, audio/video/other media files in which watermarks are encoded (or information thereof), or other data associated with certificates, watermarks, channels, or the like. In still other embodiments, one or more applications executing on computer processors associated with resolution providers 640, such as, for example, processors executing on servers of resolution providers 640, may be operable to create associations between one set of data (e.g., a Uniform Resource Identifier (URI), a Uniform Resource Locator (URL), Uniform Resource Number (URN), computer instructions, etc.) and an identifier, store the created associations, receive an identifier and a request to resolve the association, and provide the requested resolution.

Resolution providers 640 may also be communicatively connected to one or more data repositories or databases, such as databases 650. Data repositories or databases 650 may include one or more files or one or more relational and/or non-relational databases that store information and are accessed and/or managed through resolution providers 640. The databases or other files may include, for example, data and information related to registered resources, resource identifiers, channel resource identifiers, and index identifiers, and mappings there between, as well as user profile data based on previous user requests. Resolution providers 640 may communicate over a link with network 670. For example, the link may be a direct communication link, a LAN, a WAN, or other suitable connection. Resolution provider 640 may be standalone or it may be part of a subsystem, which may, in turn, be part of a larger system, such as a legacy domain registration system.

Databases 650 can be one or more computing devices configured to store databases, e.g., organized collections of data and their data structures, and/or execute database management systems, e.g., computer programs configured to control the creation, maintenance, and use of a database. Collectively, databases and their database management systems can be referred to as database systems. As used herein, database 650 can refer to databases, database management systems, and/or database systems. In some aspects, database 650 can be configured to store databases, while database management systems are stored and executed on one or more remote computing devices, such as user devices 610, publishers 630, resolution providers 640, etc., and/or one or more remote servers, such as resource provider servers 660.

In one implementation, databases 650 can include software database programs configured to store data associated with resource provider servers 660 and their associated applications or processes, such as, for example, standard databases or relational databases. Databases 650 can include relationship database management systems (RDBMS) that may be configured to run as a server on resource provider servers 660. In some aspects, databases 650 can be configured to transmit and/or receive information to and/or from user devices 610, resource provider servers 660 and/or other databases 650, publishers 630, resolution providers 640, etc., directly and/or indirectly via any combination of wired and/or wireless communication systems, method, and/or devices.

Resource provider servers 660 can be can be physical computers, or computer systems, configured to run one or more services to support users of other computers on one or more networks and/or computer programs executing on physical computers, or computer systems, and configured to serve the requests of other programs (e.g., clients) that may be operating on one or more servers 660 or on other computing devices, such as user devices 610, publishers 630, resolution providers 640, etc. Resource provider servers 660 can include, by way of example and not limitation, communication servers, database servers, fax servers, file servers, mail servers, print servers, name servers, web servers, proxy servers, gaming servers, etc. In some aspects, resource provider servers 660 can be configured to transmit and/or receive information to and/or from user devices 610, other resource provider servers 660 and/or databases 650, publishers 630, resolution providers 640, etc., directly and/or indirectly via any combination of wired and/or wireless communication systems, method, and/or devices.

In some embodiments, resource provider servers 660 may represent services or entities that are configured to provide data related to watermarks (e.g., channel resource identifiers). For example, resource provider servers 660 may represent service providers or websites that provide information to users of user devices 610. In some embodiments, resource provider servers 620 may be controlled and/or operated by one or more publishers 630 and/or resolution providers 640. In other embodiments, resource provider servers 660 may be controlled by third parties that rely upon publishers 630 to provide access to resources on resource provider servers 660. Other arrangements are possible as well. For example, an exemplary publisher 630 operating a resource provider server 660 could generate and release (e.g., sell, lease, or give away) an application for receiving information associated with watermarks (e.g., channel resource identifiers). In some embodiments, the application could retrieve information from resource provider server 660 or retrieve a web page/site from resource provider server 660.

Network 670 can be any appropriate network or other communication link that allows communication between or among one or more systems, networks, and/or devices, such as, for example, broadcasters 610, user devices 610, publishers 630, resolution providers 640, databases 650, resource provider servers 660, or other networks (not shown). Network 670 may be wired, wireless, or any combination thereof. Network 670 may include, by way of example and not limitation, the Internet, a local area network, a wide area network, a Wi-Fi network, a workstation peer-to-peer network, a direct link network, a Bluetooth connection, a bus, or any other suitable communication network.

Thus, referring to FIG. 6, resource information such as a URL, a domain name, or other resource information may be registered with one or more central databases, such as databases 650, or resolution providers, such as resolution providers 640, via a network, such as network 670. A unique identifier associated with the resource information also may be registered in the one or more central databases or registries. For example, a domain name or URL may be registered with the one or more central databases or registries and associated with a resource identifier, channel resource identifier, or other identifier encoded in an enhanced audio signal. In some embodiments, the resource identifier itself may be a domain name or a URL.

Still referring to FIG. 6, an enhanced audio signal may be created and the channel resource identifier embedded, encoded, or otherwise incorporated into the audio signal by, for example, publisher 630, and broadcast by a broadcaster, such as, for example, a radio or television signal broadcaster or private broadcaster. The channel resource identifier may be incorporated before, during, or after the channel resource channel identifier is registered with one or more central databases, resolution providers, and/or registries. As illustrated in FIG. 6, the embedded or encoded signal may form a smaller portion of the audio signal relative to the portion of the audio signal that contains content for normal user consumption, such as music, speech, or other human-perceptible and/or comprehensible audio content. Various techniques of incorporating information into an audio signal are known in the art, and the use of appropriate techniques to incorporate the identifier into an enhanced audio signal will be readily understood by those skilled in the art.

The enhanced audio signal may then be transmitted to one or more user devices, such as during or as part of a TV, radio, or other multicast signal or by a TV, radio, or other device. That is, the enhanced audio signal may comprise the radio or other electromagnetic waves transmitted by a device, such as a broadcast device, or an acoustic representation of the electromagnetic signal produced by a receiving device, such as a television or radio. In the former scenario, a user device may receive the electromagnetic signal directly from the broadcasting device, and may extract one or more resource identifiers from the electromagnetic signal. In the latter scenario, a user device may receive the acoustic sound waves from the electromagnetic signal-receiving device, such as a television or radio, and may extract one or more resource identifiers from the acoustic sound waves.

In either case, resource identifier data may be provided within the same audio signal that contains audio content for user consumption or may be transmitted in a separate audio signal concurrently with the "primary" audio signal that contains the user content. A user may activate an application, such as a software application, on the user device to access the enhanced audio signal. For example, a user watching a TV broadcast may activate an application on the user device to obtain additional information about the content of the broadcast, access a related website or other resource, etc.

As a specific example, the user may activate an application on a smart phone, personal computer, or other device. The user may be informed of the presence of the enhanced audio signal such as, for example, by an alert or notification from the listening device (e.g., user device 610), by regular announcements on a television channel the user is watching, signs or announcements in a location such as a shopping mall or airport, or any other suitable mechanism. Alternatively, a device may be operated in a monitoring mode to detect electromagnetic or acoustic signals including an enhanced audio signal component, the device alerting the user to the presence of data such as the availability of additional information provided by the audio signal, such as an informational website designated, a telephone number, etc.

When the user activates the application, the application may receive the enhanced audio signal and may access or decode one or more resource identifiers embedded within the signal. The application or device may then access the resources specified by the one or more resource identifiers, such as by downloading a webpage or file, sending a text message, making a phone call, etc. For example, the resource identifier may comprise a URL in the form of "http://www .momandpopshop.com/ deals/promotions/winter_sale_coupon.html". Upon detecting this URL resource identifier, the application or device may make an HTTP request to a resolution provider 140 and/or resource provider server 160 for the resource associated with the URL "http://www .momandpopshop.com/deals/promotions/winter_sale_ coupon.html", which may be provided to user device 610 in an HTTP response in the form of an HTML file representing a webpage.

Alternatively, the application or device may send a request that includes the one or more resource identifiers, or a portion or portions thereof, to the one or more central databases or other registries made available by a resolution provider 640 and/or resource provider server 660, which in turn may respond to the application or device by sending information on how to access the resources associated with the resource identifiers from one or more resource providers. For example, the resource identifier may comprise a URL in the form of "http://www .resolvecom.com/resolve.aspx?resource_id=0702021308220624", the domain name of which may be hosted by resource provider. The application or device may extract this resource identifier/ URL from the enhanced audio signal. The application or device may then send an HTTP request to resolution provider 640 and/or resource provider server 660, specifying the URL "http://www.resolvecom.com/resolve.aspx?resource_id= 0702021308220624". The resolution provider 640 and/or resource provider server 660 may then look up information about the resource associated with the unique identifier "0702021308220624" in a database or other memory structure, which may reveal that the requested resource may be retrieved using the URL "http://www .momandpopshop.com/deals/promotions/winter_sale_coupon.html".

Thus, resolution provider 640 and/or resource provider server 660 may send an HTTP response to user device 610 that includes the URL "http://www.momandpopshop.com/deals/promotions/winter_sale_coupon.html". Upon receiving this information about how to access the requested resource associated with the resource identifier, user device 610 may make an HTTP request to resource provider server for the resource associated with the URL "http://www .momandpopshop.com/deals/promotions/winte _sale_coupon.html", which may be provided to user device 610 in an HTTP response in the form of an HTML file representing a webpage. Resolution provider 640 and/or resource provider server 660 may also record a history of requests from particular devices and/or users in order to build profiles that can be used to better target information to users.

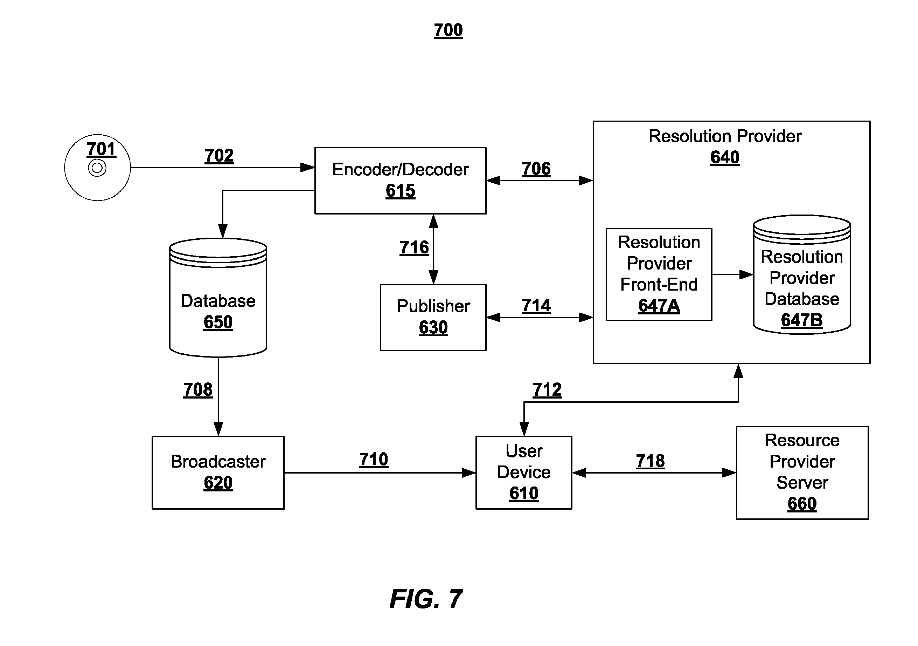

FIG. 7 represents an exemplary flowchart 700 for encoding, delivering, and processing watermarked media between an encoder, a publisher, a resolution provider, a user device, and a server, consistent with certain disclosed embodiments. Specifically, FIG. 7 illustrates an embodiment in which a publisher (e.g., publisher 630) receives a pre-recorded media item, encodes a digital watermark corresponding to an identifier in the pre-recorded media item, and provides the watermarked media item for transmission to one or more user devices (e.g., user devices 610). In the embodiment disclosed in FIG. 7, publisher 630 may own and operate an encoder, such as encoder/decoder 615 with which publisher 630 may encode watermarks. In other embodiments, however, the encoder may be operated by publisher 630, but may be maintained and/or managed by another entity, such as, for example, resolution provider 640. In still other embodiments, the encoder may be implemented as an Application Programming Interface (API) embedded in software developed by publisher 630, in whole or part, or by other software providers, either alone or in conjunction with publisher 630 and/or other software or hardware providers.

As shown in FIG. 7, encoder/decoder 615 may receive a pre-recorded media item from a memory, illustrated in FIG. 7 as memory 701. Pre-recorded media may be received by encoder/decoder 615 in any manner of communicating data from one device to another. In one example embodiment, a pre-recorded media item may be a compact disc containing an audio file; but, as mentioned before, any media type on any type of storage may be used.

Encoder/decoder 615 may encode and embed an identifier as a watermark in the received pre-recorded media. In some embodiments, publisher 630 may cause encoder/decoder 615 to encode and embed an identifier as a watermark (716). Generally, encoder/decoder 615 may be configured to enable a source input to be processed so that a decoder can recognize, decode, and extract an identifier. As discussed above, an identifier may be encoded as a watermark by, for example, by encoding the identifier as a variation in sample values or quantization values. In certain embodiments, publisher 630 may cause encoder/decoder 615 to encode and embed multiple different watermarks into a media item and/or multiple different watermarks can be inserted into a media item.

As has been explained above, the identifier may include any of a channel identifier, a sub-channel identifier, an identifier identifying a unique item, or the like. In some embodiments, publisher 630 may use a certificate associated with a particular channel to create, for example, channel resource identifiers. The channel identifier associated with the certificate may be included in the channel resource identifier. Further, publisher 630 may choose a particular sub-channel, and in some embodiments, a particular item identifier for encoding into the watermark. However, other mechanisms of granting access to a channel are possible, including embodiments that do not use certificates to grant access to a channel.

Additionally, in some embodiments, identifiers may be fully or partially encrypted. For example, in the above mentioned channel/sub-channel/identifier scheme, the channel portion of the identifier may remain unencrypted to allow, for example, for easy identification, while the remainder of the identifier may be encrypted. As another example, the channel portion and sub-channel portion of the identifier may be unencrypted, while the identifier may be encrypted.

After encoding and embedding the watermark in the media, encoder/decoder 615 may provide to resolution provider 640 information related to a resource identifier and/or channel resource identifier encoded into the watermark (706). For example, publisher 630 may send to resolution provider 640 the watermark, including the identifier data, and at least one of the media item, the watermarked media item, information about the media item, information about the watermarked media item, a fingerprint associated with the media item, a fingerprint associated with the watermarked media item, etc. A digital "fingerprint" or "fingerprinting" is a technique in which software or hardware identifies, extracts, and then compresses characteristic components of a signal, enabling the signal to be uniquely identified by its resultant "fingerprint."

Encoder/decoder 615 can also send data that publisher 630 wants to associate with a resource identifier and/or channel resource identifier encoded into a watermark to resolution provider 640. For example, publisher 630 may wish to associate the watermark with a URL, a URI, information or data for use with an application authored by that publisher 630, or the like. Additionally, watermarks can be associated with schedules (e.g., for indicating a validity period), a list of regions (e.g., for delivering different information or data based on the location-whether geographical location or geo-location- of user device 610), or other data usable in implementing and performing the described embodiments. This will enable the watermark, the media item (and/or information about the media item), and the data to be associated with one another. As will be seen later, this enables devices to receive information, perform functions, or the like, associated with the watermarked media item after requesting it from the registry.

Publisher 630, as well as other entities including broadcasters 620, resource providers, and other third parties, may interact with resolution provider 640 (714) in order to maintain, modify, add, or remove audio to URL mappings. In some embodiments, this could include changing the data associated with a watermark, changing a watermark, changing a URL associated with a watermark, adding a new watermark to a specific URL/data, removing a watermark from association with URL/data, removing a combination of a watermark and a URL/data, or the like.

Encoder/decoder 615 can also store the watermarked media item in database 650. Database 650 can be operated to send watermarked media item (708) to a remote site where watermarked media item may be played back, displayed, printed, or whatever operation is appropriate for the particular type of media item. The remote site may be, for example, associated with broadcaster 620. For example, if watermarked media item is an audio file, the audio file can be played over a loudspeaker; if watermarked media item is a video, the video can be played back on a television screen or other audiovisual device. Watermarked media item can be displayed, printed, played back, or whatever operation is appropriate, in any location. For example, a brick-and-mortar store may choose to advertise a particular coupon for its mobile-phone using customers. Playing back watermarked media item over the store loudspeaker enables the store to "push" the coupon to mobile devices, for display/advertisement to users.

In exemplary FIG. 7, watermarked media item is represented as a watermarked audio clip, and is played back, for example, over a loudspeaker, speaker, or any other device able to render ambient sound (710) to user device 610. User device 610 can then retrieve the information associated with the watermarks from, for example, resolution provider 640 (712), and utilize that information with resource provider server 660 (718). Resource provider server 660 could represent, in some embodiments, a remote web server that contains a webpage referenced by the information received from resolution provider 640; upon receiving the information, user device 610 could attempt to access the webpage on resource provider server 660. However, resource provider server 660 is merely exemplary; as mentioned before, information other than a URL/URI may be associated with the watermark, thus enabling other types of actions to be performed. Additionally, the information associated with the watermark could enable an operation wholly performed by user device 610.

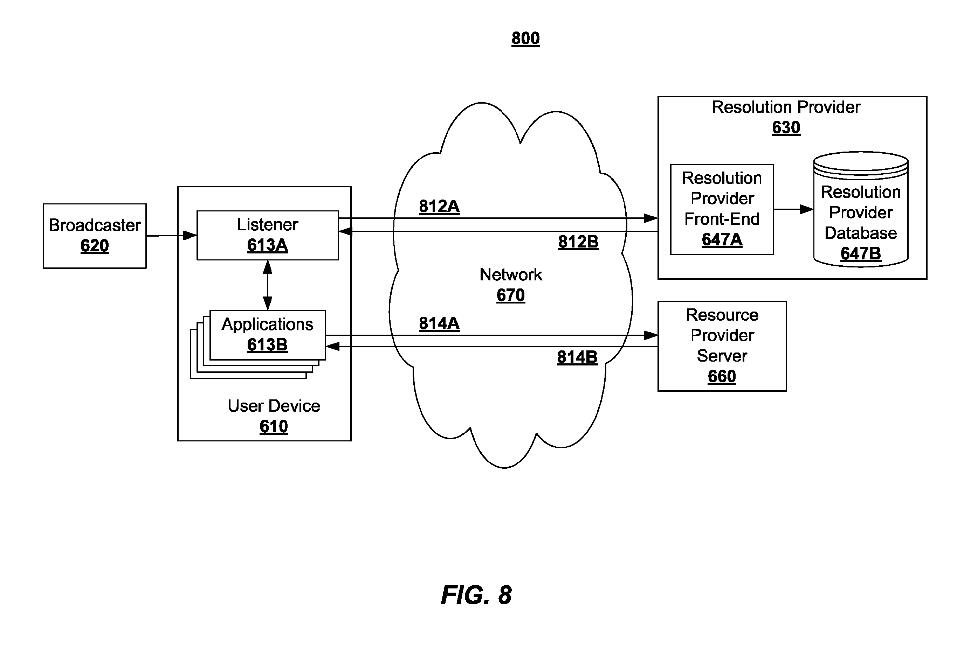

FIG. 8 represents an exemplary flowchart 800 for receiving watermarked media and processing it to receive stored information or take certain actions related to that media. As shown in FIG. 8, a watermarked media item transmitted by broadcaster 620 can be rendered in the presence of user device 610. As mentioned before, "rendering" of a media item is done in the appropriate method for the particular media item; e.g., audio files are played through a speaker or other appropriate device. Listener 613A of user device 610 may receive the rendered watermarked media item through on-board devices, such as, for example, a microphone, camera, light sensor, or any other sensor/input device that is part of user device 610.

In processing watermarked media item, listener 613A may detect and decode the embedded watermark in the media item. In decoding the embedded watermark, listener 613A can detect data present in the watermark, such as, for example, a Channel, Sub-Channel, and Item ID. In request 812A, listener 613A can send (over network 670) any or all of the watermark data to resolution provider 640. Resolution provider 640 can receive the watermark data with resolution provider front-end 647A. Resolution provider front-end 647A can then utilize the data (including the unique combination of channel, sub-channel, and item ID), in requesting information from resolution provider database 647B in order to properly resolve the request contained in request 812A. After resolving the request, resolution provider 640 may return the information associated with the watermark data to user device 610 (812B). In other embodiments, the captured watermark can be used in determining the channel, sub-channel, and item ID. That is, in some embodiments, user device 610 need not decode the received watermark, but may use it in determining the information associated with it using other known or as-yet-unknown methods. Further, in some embodiments, listener 613A need not decode the received watermark itself; rather, listener 613A can send the watermark to a separate device for decoding, and receive the information encoded in that watermark as a response.

After listener 613A receives associated data in answer 812B, listener 613A can then determine which application(s) 613B of user device 610 to which listener 613A should send the associated data. Listener 613A may determine, for example, which application(s) 613B to which it should send the associated data based on at least the channel resource identifier encoded into the watermark. Listener 613A may, in some embodiments, also use the sub-channel to determine which application 613B to send the associated data to. In other embodiments, all application(s), including, for example, application(s) 613B subscribed to a particular channel will receive all watermarks decoded that are coded to that channel; if a particular application is not programmed to process watermarks with a particular sub-channel ID, application 613B may just ignore those watermarks.

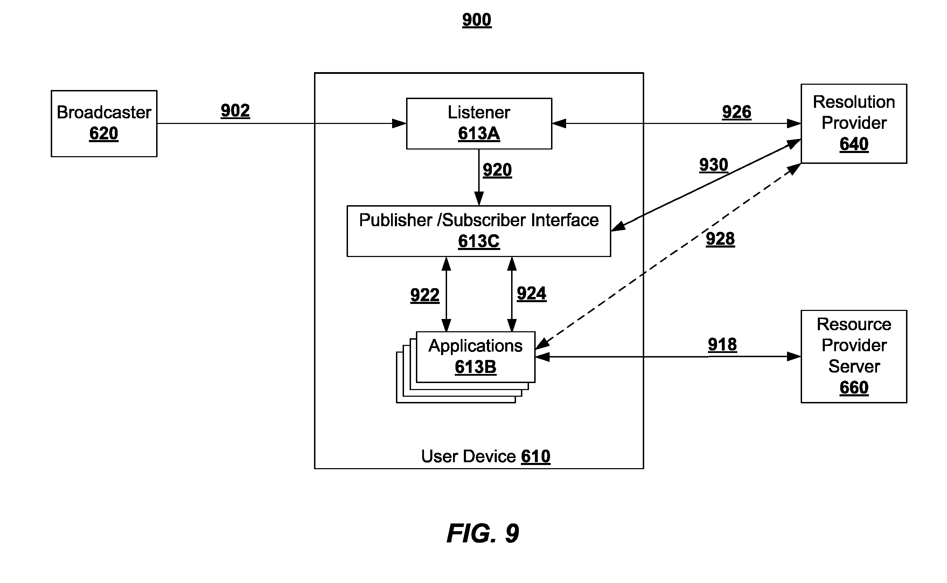

As mentioned previously, applications are only able to receive data associated with channels that the applications are subscribed to. Thus, listener 613A can determine, based on subscriptions, which applications should receive which data. This will be further explained with reference to FIGS. 9-12. However, the specific methods disclosed in FIGS. 9-12 are merely a subset of the possible embodiments and are not necessarily required in implementing the remaining elements of the inventive embodiments.

Listener 613A can deliver the associated data to the appropriate application(s) 613B, and application(s) 613B can then utilize that information. This can involve, for example, requesting a webpage stored on resource provider server 660 referenced in the associated data or requesting information referenced in the associated data from resource provider server 660 as shown in request 814A. The requested webpage may be returned in response 814B. However, in some embodiments, the appropriate application(s) 613B can also operate on the associated data, for example, to display information to a user of user device 610. Other uses of the associated data are possible, and the embodiments disclosed herein are not exclusive.

FIG. 9 represents an exemplary system and method 900 for authenticating subscriptions and sending data gathered from watermarked media to applications authenticated to have such subscriptions. Publisher/subscriber interface 613C of user device 610may, in some embodiments, serve as a conduit for authenticating, establishing, and maintaining subscriptions with application(s) 613B.

In FIG. 9, broadcaster 620 may transmit watermarked media and the watermarked media may be received by user device 610 (902). In some embodiments, listener 613A (on user device 610) may receive the watermarked media. After retrieving the watermark from the media item, listener 613A may resolve the information in the watermark against resolution provider 640 (926). After receiving associated information from resolution provider 640, listener 613A may then deliver the received information (920) to publisher/subscriber interface 613C. Publisher/subscriber interface 613C, which may, in some embodiments, be part of listener 613A, may then send the data associated with the watermark to the appropriate application 613B (924), based on the subscriptions managed by publisher/subscriber interface 613C. In other embodiments, listener 613A may determine which channels to send the data to, and send it to infrastructure 613C for processing. As mentioned earlier, application 613B may then interact with resource provider server 660 (918) to request and receive data.

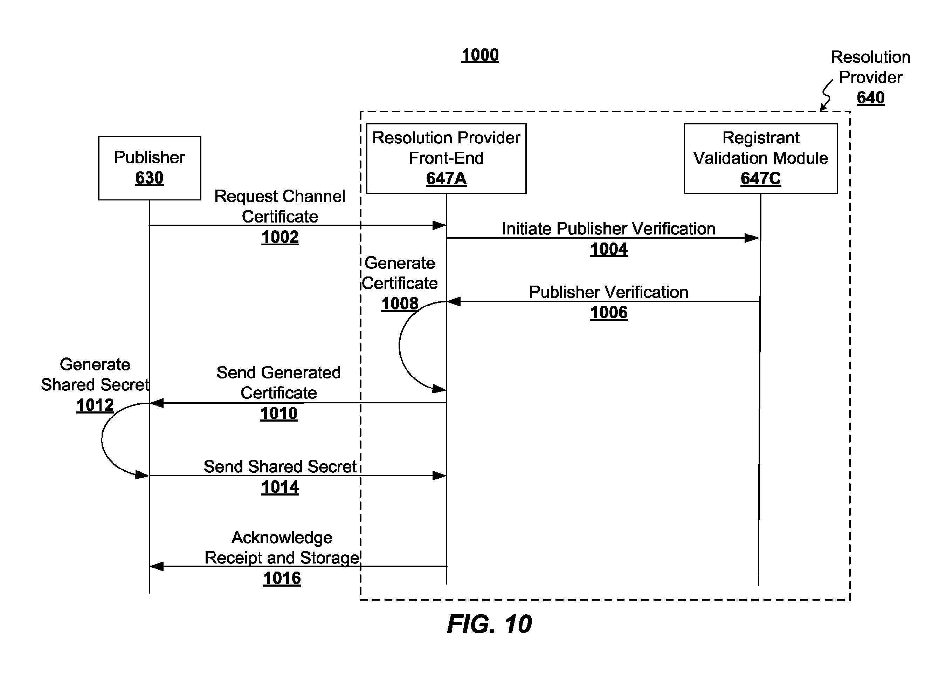

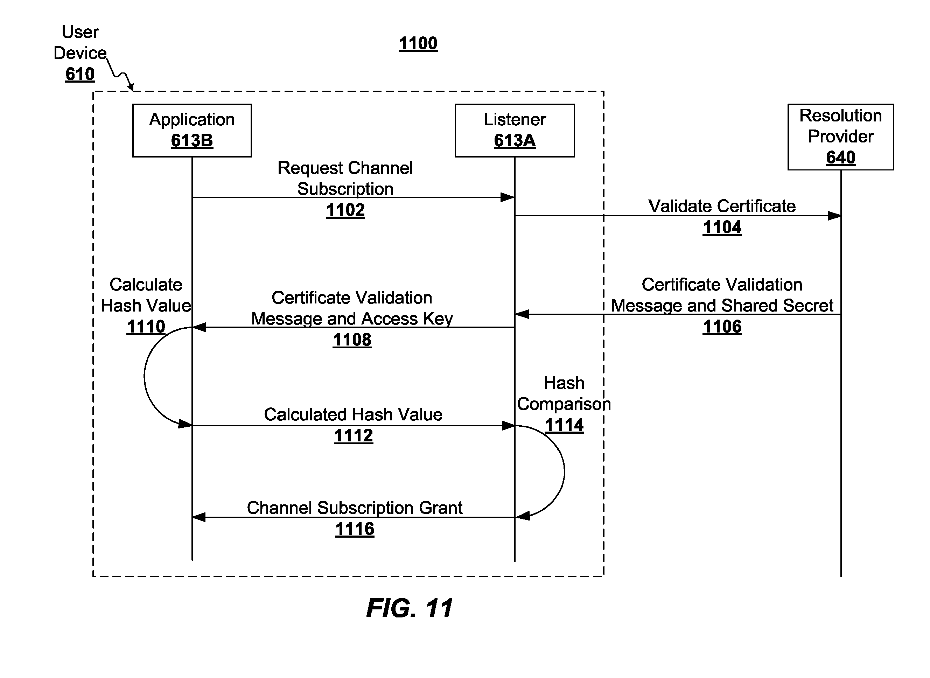

Applications 613B may communicate with either of listener 613A or Publisher/subscriber interface 613C in order to subscribe to a particular channel (e.g., 922). This will be described further with respect to FIGS. 10 and 11.

In some embodiments, while listener 613A, Publisher/subscriber interface 613C, and applications 613B are represented as separate modules, listener 613A and/or Publisher/subscriber interface 613C could be implemented as part of any or all of applications 613B. Additionally, applications 613B may communicate with resolution provider 640, either directly or through publisher/subscriber interface 613C. For example, applications 613B may communicate with resolution provider 640 in order to directly retrieve information. This is represented by 928 and 930.

In some embodiments, resolution provider 640 may enforce channel restrictions upon applications 613B and listener 613A. For example, listener 613A may authenticate with resolution provider 640 for each channel that applications 613B wish to access. After receiving a watermarked media item, listener 613A may send the watermarked media item to resolution provider 640 for resolution (926). Resolution provider 640 may, in turn, determine which channels listener 613A has authenticated to. Resolution provider 640 may then send back results only for the channels with which that listener 613A is associated (926).

Additionally, in some embodiments, encoded identifiers may be encrypted for security purposes. For example, in an identifier having a channel portion, a sub-channel portion, and an item ID portion, the channel portion may be unencrypted, while the remainder of the identifier may be encrypted. This can allow listener 613A and/or resolution provider 640 to understand which channel a specific identifier is associated with, without being able to (or even needing to know) the particulars of the information stored in the identifier. This encryption scheme can be accomplished through any method currently known or unknown to those of skill in the art. As one example, the previously-mentioned certificates can be used to encrypt/decrypt Identifiers - but other schemes are possible as well.

FIG. 10 represents an exemplary method 1000 for requesting and generating a certificate which enables applications to subscribe to channels. While certificates are used to authenticate and authorize certain actors that interact with the disclosed systems and perform the disclosed methods, other methods of authentication/authorization are possible as well, and one of ordinary skill in the art would understand a multitude of methods/systems of accomplishing these objectives without departing from the spirit of the disclosed embodiments.

As shown in FIG. 10, publisher 630 can request a channel certificate (1002). In some embodiments, the request for a channel certificate may include a particular channel resource identifier. In other embodiments, however, the request for a channel certificate may not include a channel resource identifier, and the channel resource identifier is supplied to publisher 630 by resolution provider 640. In any case, resolution provider front-end 647A (which may be, in some embodiments, a web-based interface, a standalone program, a server, or the like) receives the request for a channel certificate, and initiates publisher verification to validate publisher 630 (1004). In embodiments, publisher verification may be manually-operated (e.g., without initiating an automatic verification process, etc.). Other registration/authorization processes are also possible.

Registrant validation module 647C of resolution provider 640 receives the publisher verification request (1004). Although illustrated as included in resolution provider 640, registrant validation module 647C may be included in resolution provider front-end 647A or, alternatively, may be included in an element of another system; the illustration as part of resolution provider 640 is one exemplary configuration. The validation of publisher 630, which may be automatic or manual in nature, may include, for example, determining whether the business is a legitimate one, determining the health of the business, determining the financial strength of the business, determining past interactions with and/or history of the business, or the like. Other verification processes are possible as well. If registrant validation module 647C determines that publisher 630 should be verified, a publisher verification message is transmitted or sent to resolution provider front-end 647A, indicating that publisher 630 is verified (1006). If registrant validation module 647C determines that publisher 630 is not a valid publisher 630, registrant validation module 647C may send back a different message - this is not illustrated for simplicity of understanding.

Upon receiving the publisher verification message, resolution provider front-end 647A may generate a certificate for publisher 630 (1008). In some embodiments, the certificate for publisher 630 may be generated by another system and or process, whether internal to resolution provider 640 or external to resolution provider 640, and returned to resolution provider front-end 647A. This certificate, as mentioned earlier, may include a channel identifier that can be used by publisher 630. The generated certificate may also include information present in other types of certificates, such as standard X.509 digital certificates. This may include any or all of, for example, a "serial number" field identifying the certificate, a "Subject" field identifying the owner of the certificate, a "Signature" field verifying the origin of the certificate, a "Signature Algorithm" field used in creating the signature, a field identifying the "Issuer" who created the certificate (in some cases, this may be the identity of resolution provider 640 or another related entity), a "Valid-From" field indicating when the certificate begins validity, a "Valid-To" field indicating when the Certificate expires, a "Key-Value" field indicating the purpose of the certificate (e.g., that the certificate will be used for creating watermarks or, more generally, signatures), a "Public Key" field, a "Private Key" field, or the like. These fields may be augmented or adapted as one of ordinary skill would understand necessary for particular embodiments.

After generating the certificate, resolution provider front-end 647A may send the generated certificate to publisher 630 (1010). Publisher 630 may receive the certificate, and then generate a shared secret for use with the certificate (1012). This may comprise, in some embodiments, a password or other data that enables only those who possess that particular shared secret (e.g., publisher 630 or those entities authorized by publisher 630 to possess the shared secret) to utilize the certificate in creating watermarks. Publisher 630 can then send the shared secret (with the certificate or some information identifying the certificate - such as a serial number or public key) to resolution provider front-end 647A (1014). Upon receiving the shared secret from publisher 630, resolution provider front-end 647A may store the shared secret in association with the certificate, and acknowledge receipt and storage of the received shared secret and certificate (1016).

As noted before, publisher 630 may then, in some embodiments, use the certificate in creating watermarks. The received certificate and shared secret may ensure that an encoder only encodes watermarks with the channel authorized by the certificate. Those skilled in the art will recognize the myriad ways of accomplishing this.

FIG. 11 represents an exemplary method 1100 for requesting a subscription to a particular channel. As mentioned previously, in some embodiments, applications provided by one publisher 630 will be unable to receive and/or decode information associated with watermarks created by another publisher 630. Further, while publishers 630 may write the applications which receive and/or decode information associated with watermarks, other entities may prepare and distribute applications that are configured to receive and/or decode information associated with watermarks for channels controlled by publisher 630. The channel concept and the subscription process in FIG. 11 illustrate embodiments usable to prevent information associated with watermarks created by one publisher 630 to be received and/or decoded by another publisher 630 or any other entity not authorized by the publisher 630 that controls the particular channel.

As shown in FIG. 11, application 613B of, for example, user device 610, may request a subscription to a channel (1102). In some embodiments, application 613B may request the subscription to the channel using a certificate or authentication mechanism that enables the applications 613B to subscribe to the channel. Application 613B may receive the certificate through any number of different methods. For example, application 613B may receive the certificate embedded into the application 613B upon its creation (e.g., as part of the application 613B or included with the application 613B when installed on the device), application 613B may download the certificate from publisher 630, application 613B may receive the certificate from publisher 630 in an email, or the like. Further, in some embodiments, application 613B may have prior knowledge of the channel identifier for which it is requesting a subscription, and may insert the channel identifier in the request for a channel subscription. In other embodiments, application 613B may receive channel identifier and/or certificate from listener 613A of user device at a later time.

In any event, listener 613A may receive the subscription request, and send the certificate received from application 613B to resolution provider 640 for validation (1104). In some embodiments, listener 613B may send to certificate to resolution provider 640 to determining whether or not to allow application 613B to subscribe to a particular channel. Although not illustrated, in some embodiments, the disclosed authentication/ authorization processes may operate separately from resolution provider 640 or may be performed by an entity other than resolution provider 640.

Resolution provider 640 may perform validation of the received certificate validation through any number of known or unknown methods, including, for example, checking a public key algorithm, checking a current date/time against an expiry time of the certificate, checking revocation status against a list or database of revoked certificates, checking an issuer name to make sure it equals a subject name of the issuer's certificate, checking all of the certificates in the trust "chain" or line of certificates, etc.

If resolution provider 640 determines that the certificate is valid, resolution provider 640 may send or transmit a certificate validation message and a shared secret to listener 613A ((1106). In some embodiments, the shared secret is associated with the validated certificate. Although not illustrated, if resolution provider 640 does not or cannot verify the certificate, resolution provider 640 may send back a different message.

Upon receiving the certificate validation message and shared secret, indicating the certificate was successfully validated or verified, listener 613A may send the certificate validation message and an access key to application 613B (1108). The access key may be, in some embodiments, a one-time value (also known as a "nonce") and may be used to validate the application. In other embodiments, the access key may be the shared secret. The access key may be supplied with each transaction or transmission exchanged between listener 613A and application 613B. This keeps listener 613A from requiring application 613B to re-authenticate with each interaction, while preventing other applications that do not possess the same access key from interacting with listener 613A.

Application 613B may combine the access key and the shared secret (the one received by publisher 630 in earlier figures, which was also received by listener 613A) by, for example, appending one to the other, and calculating a hash value for the combined access key and shared secret (1110). Application 613B may send the calculated hash value to listener 613A (1112), and listener 613A may compare the hash value calculated by application 613B against a hash value calculated by listener 613A (1114). In some embodiments, listener 613A may perform the same hashing operation as that performed by application 613B (e.g., combining the "access key" sent to application 613B with the "shared secret,", and determining the hash value of the combined data).

If listener 613A determines that the hash value calculated by application 613B and the hash value calculated by listener 613A are equivalent to, or the same as, one another, listener 613A may determine that application 613B should be granted a subscription to the channel referenced by the certificate. When listener 613A determines that application 613B should be granted a subscription, listener 613A may send a channel subscription grant message to application 613B (1116). The channel subscription grant message will inform application 613B that it has successfully subscribed to the channel referenced by the certificate, and that application 613B will receive watermark data coded to that channel.

The process in FIG. 11 may be performed as a one-time process, may be performed each time application 613B is launched, and/or may be performed on any other desired schedule. Additionally, in some embodiments, the certificate validation message and shared secret, shown by 1106, may be cached by listener 613A to enable off-line or "disconnected" mode use of application 613B.

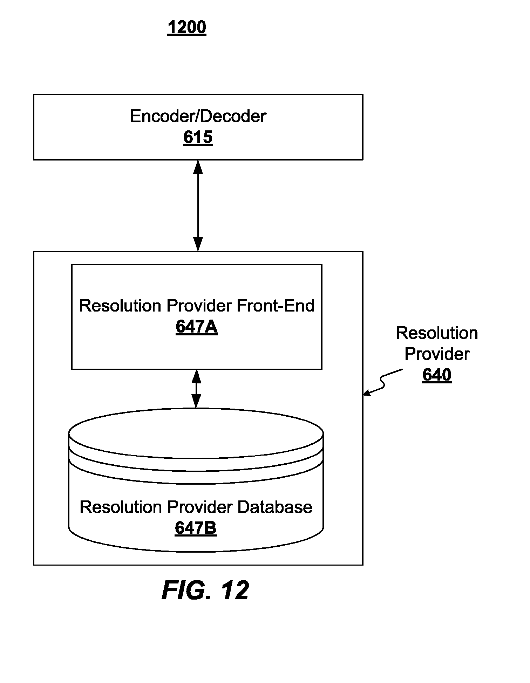

FIG. 12 represents an exemplary system 1200 for creating, storing, and delivering information related to watermarked media. In FIG. 12, encoder/decoder 615 may communicate with resolution provider 640 to deliver information on encoded watermarks and/or information to be associated with the watermarks. Communication between encoder/decoder 615 and resolution provider 640 can be accomplished using resolution provider front-end 647A. Resolution provider front-end 647A may be, in some embodiments, a webserver or similar software that is able to send and/or receive data over any network, such as network 670, or transmission medium. Resolution provider front-end 647A may contain functionality to enable operations such as registration of watermarks, watermarked data, information associated with watermarks, and or information associated with watermarked data (e.g., creation of new watermark entries in resolution provider 640, association of watermarks to URLs or other data, etc.), resolution of watermarks, watermarked data, information associated with watermarks, and or information associated with watermarked data (e.g., resolving a watermark and/or its associated data, etc.), and maintenance of watermarks, watermarked data, information associated with watermarks, and or information associated with watermarked data (e.g., modifying watermarks and/or the data associated with watermarks, etc.).

Resolution provider front-end 647A may also enable various provisioning, administrative, and/or reporting functions. For example, resolution provider front-end 647A may enable monitoring of activity related to one or more watermarks, may collect and compile data reported by the monitoring activity, and may perform analysis of the collected and compiled data to identify trends related to one or more watermarks. Publishers 630 can interact with resolution provider front-end 647A to receive this information, or it can be delivered on a regular basis, in order to determine usage patterns and monetization possibilities. As another example, resolution provider front-end 647A may be configured to provide applications, such as, for example, user interfaces, application programming interfaces, executable files, etc., to publishers 630 and/or other entities to enable publisher 630 and/or other entities to administer watermarks and their associated data, receive reports on watermarks and their associated data, and/or modify watermarks and their associated data entries stored in or by resolution provider 640.

Resolution provider database 647B can be used to store watermark data and information associated with watermarks. For example, resolution provider database 647B can store identification data associated with a particular watermark (e.g., an entire watermark, portions of a watermark, a fingerprint of a watermark, an identifier or other data in, or associated with, the watermark, etc.), in association with the URL or other data that can be sent to requesting devices, such as, for example, user device 610. In FIG. 12, the use of a URL is merely exemplary - as explained previously, in some embodiments, other data is appropriate. Resolution provider database 647B can also store information on the media associated with the watermark. In some embodiments, resolution provider database 647B can also store the media itself. For example, in some embodiments, a song with an embedded watermark (or without the watermark embedded) can be stored in resolution provider database 647B. Further, resolution provider database 647B can also store metadata concerning any of the information stored in said database.

Other embodiments will be apparent to those skilled in the art from consideration of the specification and practice disclosed herein. It is intended that the specification and examples be considered as examples only, with a true scope and spirit being indicated by the following claims. The methods and systems described herein may be used by and incorporated in a variety of user devices, including mobile phones, IP-connected televisions, ebook readers, laptops, netbooks, and other personal computers, and may be also be beneficial when used with those devices that lack a full keyboard or other convenient text input device.

In some embodiments because the system may direct users seamlessly to a destination, an application with malicious intent or legitimate application with compromised security may redirect the user to a nefarious destination thus potentially perpetuating fraud. To combat this, software and hardware applications on the user devices may include cryptographic certificates that check for the authenticity and security of the destination resource with a central database, or other mechanisms for verifying the authenticity and/or security of a destination resource.

The following examples are provided as illustrations only, and it will be understood that they do not limit the disclosed embodiments beyond the terms in the claims appended hereto.

Broadcast Program: In one example, a user may be watching a television broadcast, such as of the Super Bowl, that is broadcast with audio containing watermarks representing encoded resource identifiers. The user may desire statistics for various players or teams in the game, and may activate an application capable of processing the watermarked data on a mobile telephone, computer, or other electronic device. The application may receive an audio signal from a television (e.g., in the form of acoustic waves) or a broadcast antenna (e.g., in the form of an electromagnetic signal), identify and decode a resource identifier from the signal, and send the resource identifier to a central registry, such as VERISIGN™. The central registry may then translate that identifier into a relevant URL and send it back to the application, which navigates to destination webpage or site in a browser of the device.

Advertising Campaign: As another example, a marketing company may register a resource identifier for a particular product or group of products, and the resource identifier may be carried in a watermarked commercial that is transmitted via broadcast or other media transmission. A consumer listening to the commercial may be directed to a resource, e.g., a web page or website, by activating an application on their phone. In some embodiments, all commercials for a particular product or group of products may use the same resource identifier, and the user may be directed to a common webpage. In other embodiments, each commercial for a particular product or group of products may use a different resource identifier, and the user may be directed to either a common webpage or a specific webpage for each commercial.

Geolocational Advertising: In embodiments having GPS-derived geolocation information, an identifier and/or destination resource may be used in connection with geolocation information to identify stores or businesses related to the resource identifier and/or resource within a predetermined vicinity of the user device. That is, the enhanced audio signal may provide the same resource identifier to all listening devices, irrespective of location. However, each listening device may request resolution from a resolution server by providing not only the resource identifier extracted from the enhanced audio signal, but also an indication of the device's current geographic location. Accordingly, the resolution server may provide different resource access information to each requesting device depending on each device's geographic location.

Promotional Codes: As another example, the resource identifier may be a promotional code, and the encoded promotional code may be embedded within an enhanced audio signal in the form of an acoustic signal. In such an embodiment, the acoustic signal may be an advertising "jingle" or the like. The user device may be configured to decode the resource identifier and display the promotional code to the user. The user, in turn, may access a web page and may use the promotional code at the time of check-out in an e-commerce transaction to avail him/herself of discounts. For example, a DISNEY™ advertisement could have an encoded promotional code, such as, for example, "mickey55," embedded in the audio signal. The user device may decode this promotional code, and the user would be able to use this promotional code to purchase tickets to DISNEYLAND™ at a discounted price. In some embodiments, in addition to a resource identifier being a promotional code, a second resource identifier may be provided in the same acoustic signal that automatically directs the user to a purveyor of the promotional code.

Security and/or Emergency Applications: In some embodiments, the decoded resource identifier is itself useful information that could convey some message to the user or be stored in the user device for later action. The action may, in some cases be mandatory; while in others the action may not be mandatory. For example, in military applications, the resource identifier may be a command message, a secret message, a classified message, etc., to one or more soldiers and/or civilians connected to the military. As another example, during a time of crisis, such as an earthquake, volcanic eruption, tornado, etc., the resource identifier may include an alert message for one or more users.

Automatic Contest Registry and/or Voting: As still another example, the resource identifier may be associated with a web page or website associated with an online and/or broadcast contest. For example, a user may be able to cast votes for favorite contestants in television or other broadcast shows, or the like.

DVD/Blu-Ray: DVDs, Blu-Ray discs, or other similar media may be sold with resource identifiers embedded in one or more audio tracks of the media. As the consumer is watching the movie or listening to the DVD, the consumer can activate an application to obtain and decode a resource identifier from the acoustic signal provided by the viewing device. The resource identifier may direct the consumer to a destination webpage or site that sells merchandise associated with the movie or music.

Radio: A user listening to breaking news being broadcast with resource identifiers may want more details on the topic of the news report. The user may activate an appropriate application to capture the resource identifier, which will then direct the user to a webpage, site, or other resource that provides additional details about the news story or other event.

Device with No IP connectivity: A user may be listening to breaking news being broadcast with resource identifiers encoded into watermarks, and may want more details on the news story. The user may activate an application using a device that is either not connected to the Internet or cannot connect to the Internet. The application may communicate to the central database or registry via text message, e.g., SMS, MMS, etc., and receive in return a phone number to call. In some cases, such as where the user's device is a mobile phone, the software application may launch a call to the phone number provided by the central database or registry.

Another embodiment of the methods and apparatus described in this application can help enable secure zones. For example, in certain high security buildings, areas, or the like, there may be security zones at the perimeter. In such an embodiment, any device passing through the security zone may be instructed, via microwave signals or the like, to enforce a set of pre-defined policies for files (documents, presentations, emails, pictures, spreadsheets, etc.) on the device. Thus, for example, codes embedded in the microwave signals can indicate to the device to disallow email forwarding, or document sharing. In such an embodiment, a user device outside the zone will not be able to access files designated as secure on the user device when the user device is not in the pre-defined secure zone. In another embodiment, codes embedded in the signals can indicate to the device to erase, disable, destroy, rewrite, or otherwise manipulate emails or other files that were acquired in the secure zone or when leaving the secure zone.

In one exemplary embodiment, a resource provider registers a first URL and a resource identifier, such as a numerical identifier, with a resolution service provider. The resolution service provider stores the first URL and the resource identifier in a central database, along with an association between the two. A transmitting device transmits an electromagnetic signal or acoustic signal that includes the resource identifier within the transmitted data. A first user device detects the resource identifier within the signal and makes an HTTP request to a resolution server that includes the resource identifier. The resolution server looks up the resource identifier in the central database to locate the first URL associated with the resource identifier, and sends the first URL back to the first user device. The first user device then sends an HTTP request to a resource provider server associated with the first URL for a resource specified by the first URL. The resource provider server then transmits a webpage associated with the first URL back to the first user device.

At a later time, the resource provider communicates with the resolution service provider or resolution server to re-associate the resource identifier with a second URL that differs from the first URL. A transmitting device transmits an electromagnetic signal or acoustic signal that includes the resource identifier within the transmitted data. A second user device detects the resource identifier within the signal and makes an HTTP request to the resolution server that includes the resource identifier. The resolution server looks up the resource identifier in the central database to locate the second URL associated with the resource identifier, and sends the second URL back to the second user device. The second user device then sends an HTTP request to a resource provider server associated with the second URL for a resource specified by the second URL. The resource provider server then transmits a webpage associated with the second URL back to the second user device. In this manner, the resource provider is able to modify which resource users may access using the resource identifier embedded in the enhanced audio signal, without changing the resource identifier itself or the enhanced audio signal.

The embodiments and the various features and advantageous details thereof are explained more fully with reference to the non-limiting embodiments and/or illustrated in the accompanying drawings and detailed in the foregoing description. It should be noted that the features illustrated in the drawings are not necessarily drawn to scale, and features of one embodiment may be employed with other embodiments as the skilled artisan would recognize, even if not explicitly stated herein. Unless defined otherwise, all technical and scientific terms used herein have the same meanings as commonly understood by one of ordinary skill in the art to which the embodiments pertain. Use of the indefinite article "a" or "an" in the specification and the claims is meant to include one or more than one of the feature that it introduces, unless otherwise indicated.

It is understood that the invention is not limited to the particular methodology, protocols, topologies, etc., as described herein, as these may vary as the skilled artisan will recognize. Various modifications and variations of the described methods and systems of the disclosed embodiments will be apparent to those skilled in the art without departing from the scope and spirit of the invention. Indeed, various modifications of the described modes for carrying out the invention which are obvious to those skilled in the relevant arts or fields are intended to be within the scope of the appended claims.

## Claims

1. A method of registering identifiers and associated information, comprising:
receiving a channel identifier associated with at least one channel;
generating, using at least one computer, at least one identifier for use with an application, wherein the at least one identifier includes at least one identifier segment and the identifier segment is associated with the at least one channel identifier; and
sending the at least one identifier to a resolution provider.

2. The method of claim 1, further comprising:
associating the at least one identifier with at least one media item and information;
sending, to the resolution provider, the at least one identifier; and
sending, to the resolution provider, the information that is associated with the at least one identifier;
optionally the associated information is at least one of a URL, a URI, or data for use by the application, and wherein the at least one media item comprises at least one of a sound clip, a music clip, a video, an image, a picture, a signal, or data.

3. The method of claim 2, further comprising:
encoding the at least one media item with the at least one identifier; and
providing the at least one media item that is encoded with the at least one identifier to an entity for broadcast to one or more user devices; and/or
broadcasting, to one or more user devices, the at least one media item that is encoded with the at least identifier.

4. The method of any preceding claim, further including:
receiving an authentication item from the resolution provider;
generating a shared secret; and
sending the shared secret to the resolution provider.

5. The method of claim 4, further including:
encoding the at least one media item with the at least one identifier and the authentication item;
optionally the method further including providing the at least one media item that is encoded with the at least identifier and the authentication item for broadcast to one or more user devices.

6. A method for resolving identifiers, comprising:
receiving, by a user device, a media item associated with at least one identifier, wherein the identifier includes at least one identifier segment associated with at least one channel identifier;
causing the at least one identifier to be decoded;
sending, to a resolution provider, a request including the at least one identifier;
receiving information from the resolution provider, wherein the information is associated with the at least one identifier;
identifying, by the user device, at least one application operating on the user device that is authorized to receive the information associated with the at least one identifier, based on at least one of the content of the identifier or the channel identifier; and
delivering the information to the at least one application that is identified.

7. The method of claim 6, wherein the at least one identifier is embedded in the media item, and the identifying the at least one application includes:
determining, using a certificate, that the at least one application is authorized to receive the information associated with the at least one identifier.

8. The method of claim 6 or 7, wherein the identifying the at least one application includes:
determining that the at least one application is subscribed to a channel associated with the channel identifier;
optionally the method further comprises transmitting, from at least one requesting application of the user device, a request to subscribe to the channel associated with the channel identifier.

9. The method of claim 8, further comprising:
receiving an indication that the request to subscribe to the channel is granted; and/or
wherein the request to subscribe to the channel includes at least one authentication item, the method further including receiving at least one of a certificate validation message and a shared secret.

10. A system for registering identifiers and associated information, comprising:
at least one storage device storing instructions; and
at least one computer processor configured to execute the instructions and cause the system to:
receive a channel identifier associated with at least one channel;
generate at least one identifier for use with an application, wherein the at least one identifier includes at least one identifier segment and the identifier segment is associated with the at least one channel identifier; and
send the at least one identifier to a resolution provider.

11. The system of claim 10, wherein the at least one processor is further configured to:
associate the at least one identifier with at least one media item and information;
send, to the resolution provider, the at least one identifier; and
send, to the resolution provider, the information that is associated with the at least one identifier; optionally
the associated information is at least one of a URL, a URI, or data for use by the application, and wherein the at least one media item comprises at least one of a sound clip, a music clip, a video, an image, a picture, a signal, or data.

12. The system of claim 11, wherein the at least one processor is further configured to:
encode the at least one media item with the at least one identifier; and
broadcast, to one or more user devices, the at least one media item that is encoded with the at least identifier; and/or
the at least one processor is further configured to:
receive an authentication item from the resolution provider;
generate a shared secret; and
send the shared secret to the resolution provider;
optionally the at least one processor is further configured to encode the at least one media item with the at least one identifier and the authentication item;optionally the at least one processor is further configured to provide the at least one media item that is encoded with the at least identifier and the authentication item to one or more user devices.

13. A system for resolving identifiers, comprising:
at least one storage device storing instructions; and
at least one computer processor configured to execute the instructions and
cause the system to receive media associated with at least one identifier, wherein the identifier includes at least one identifier segment associated with at least one channel identifier;
cause the at least one identifier to be decoded;
send, to a resolution provider, a request including the at least one identifier;
receive information from the resolution provider, wherein the information is associated with the at least one identifier;
identify at least one application operating on the user device that is authorized to receive the information associated with the at least one identifier, based on at least one of the content of the identifier or the channel identifier; and
deliver the information to the at least one application that is identified.

14. The system of claim 13, wherein one or more of:
the at least one identifier is embedded in the media, and when the at least one process is configured to identify the at least one application, the at least one processor is further configured to determine, using a certificate, that the at least one application is authorized to receive the information associated with the at least one identifier; and/or
when the at least one processor is configured to identify the at least one application, the at least one processor is further configured to determine that the at least one application is subscribed to a channel associated with the channel identifier; optionally the at least one processor is further configured to:
transmit, from at least one requesting application of the user device, a request to subscribe to the channel associated with the channel identifier.

15. The system of claim 14, wherein the at least one processor is further configured to:
receive an indication that the request to subscribe to the channel is granted;
optionally the request to subscribe to the channel includes at least one authentication item, and wherein the at least one processor is further configured to: receive at least one of a certificate validation message and a shared secret.
